(19) Europäisches Patentamt

European Patent Office

Office européen des brevets

(11) EP 1 731 348 A2

(12) EUROPEAN PATENT APPLICATION

(43) Date of publication:
13.12.2006 Bulletin 2006/50

(51) Int Cl.:
B60K 23/08 (2006.01)

(21) Application number: 06011844.5

(22) Date of filing: 08.06.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 10.06.2005 JP 2005171556

(71) Applicant: FUJI JUKOGYO KABUSHIKI KAISHA
Tokyo (JP)

(72) Inventor: Yoneda, Takeshi
1-chome,
Shinjuku-ku,
Tokyo (JP)

(74) Representative: Vossius & Partner
Siebertstrasse 4
81675 München (DE)

(54) Vehicle drive power distribution control device

(57) In a drive power distribution control section (30), input torque sensing transfer torque is calculated by first transfer torque calculating section (33), steering angle/yaw rate sensing transfer torque is calculated by second transfer torque calculating section (34), and tack-in prevention transfer torque is calculated by third transfer torque calculating section (35). Then, in fourth transfer torque calculating section (36), initial torque at high speed, added in a high speed region where vehicle speed exceeds a predetermined speed, is set, and in transfer torque calculating section (37) these torques are summed and output to transfer clutch drive section (31). Thus, stability in a high speed region is ensured, while eliminating needless limited slip control in a low speed region, without the addition of complicated computations and sensors.

FIG.2

## Description

The present invention relates to a vehicle drive power distribution control device for appropriately distributing drive power to one drive shaft and to another drive shaft.

In recent years, there have been many proposals for technology for positively controlling drive power distribution to front and rear wheels as well as drive power distribution for left and right wheels, in a vehicle, to improve stability and turning performance of the vehicle.

For example, Japanese patent laid-open No. 2002-127772 discloses technology for calculating torque sensing torque constituting engaging torque of the clutch means by correcting input torque from an engine using vehicle speed, steering wheel angle, road surface μ (coefficient of friction on a road) etc.

However, it is a well established fact that tire radius, determined with vertical load, wheel speed, air pressure and tire wear level as parameters, differs between front and rear, and in vehicle drive power distribution control, including the above described Japanese patent laid-open No. 2002-127772, if that difference is compensated by using differential rotation between front and rear axles it is liable to arise for instability, particularly at high speed.

There has therefore been a demand for a method for compensating this difference using a slip ratio between road surface μ and the tire. This can be handled by applying a predetermined extent of limited slip torque, but at low speed this is not necessary, and depending on the amount of steering turn there is a danger of causing a tight corner-braking phenomenon.

The present invention has been conceived in view of the above described situation, and an object of the invention is to provide a drive power distribution control device for a vehicle that can eliminate needless limited slip control in a low speed region, while ensuring stability in a high speed region, without the addition of complicated computations and sensors.

A drive power distribution control device for a vehicle of the present invention comprises clutch means for varying drive power distribution between one drive shaft and another drive shaft, engaging torque calculating means for calculating engaging torque of the clutch means depending on parameters representing traveling state of the vehicle, initial torque setting means for setting an initial torque applied in a high speed region exceeding a predetermined vehicle speed, and control means for controlling the clutch means based on a torque value that is the initial torque set by the initial torque setting means added to the engaging torque calculated by the engaging torque calculating means.

The above and other objects, features and advantages of the invention will become more clearly understood from the following description referring to the accompanying drawings.

One embodiment of the present invention will be described in the following based on Fig. 1 to Fig. 23.

Fig. 1 is an explanatory drawing showing the schematic configuration of an overall drive system of a vehicle.
Fig. 2 is a functional block diagram of a drive power distribution control section.
Fig. 3 is a functional block diagram of a first transfer torque calculating section.
Fig. 4 is a functional block diagram of a second transfer torque calculating section.
Fig. 5 is a functional block diagram of a basic additional yaw moment setting section.
Fig. 6 is a flow chart of a drive power distribution control program.
Fig. 7 is a flowchart of a first transfer torque calculating routine.
Fig. 8 is a flowchart of an engine torque calculating routine.
Fig. 9 is a flowchart of a first input torque sensing transfer torque calculating routine.
Fig. 10 is a flowchart of a second input torque sensing transfer torque calculating routine.
Fig. 11 is a flowchart of a second transfer torque calculating routine.
Fig. 12 is a flowchart of a basic additional yaw moment setting routine.
Fig. 13 is a flowchart of a vehicle slip angular velocity sensing gain setting routine.
Fig. 14 is a flowchart of a third transfer torque calculating routine.
Fig. 15 is a characteristic drawing for input torque sensing transfer torque.
Fig. 16 is a characteristic explanatory drawing for simulated lateral acceleration causing saturation of reference lateral acceleration for actual lateral acceleration.
Fig. 17 is a characteristic explanatory drawing for reference lateral acceleration for lateral acceleration/calculated values of steering wheel angle gain multiplicated by steering wheel angle.
Fig. 18 is a characteristic explanatory drawing for vehicle speed sensing gain when running at low speed.
Fig. 19 is a characteristic explanatory drawing of basic vehicle slip angular velocity sensing gain with respect to vehicle slip angular velocity.
Fig. 20 is an explanatory drawing of limitation due to vehicle slip angular velocity sensing gain with return gradient limit.
Fig. 21 is a timing chart showing one example of vehicle slip angular velocity sensing gain to be set.
Fig. 22 is a characteristic explanatory drawing for vehicle speed sensing gain when running at high speed, with respect to vehicle speed and actual lateral acceleration.

Fig. 23 is a characteristic drawing of initial torque at high speed.

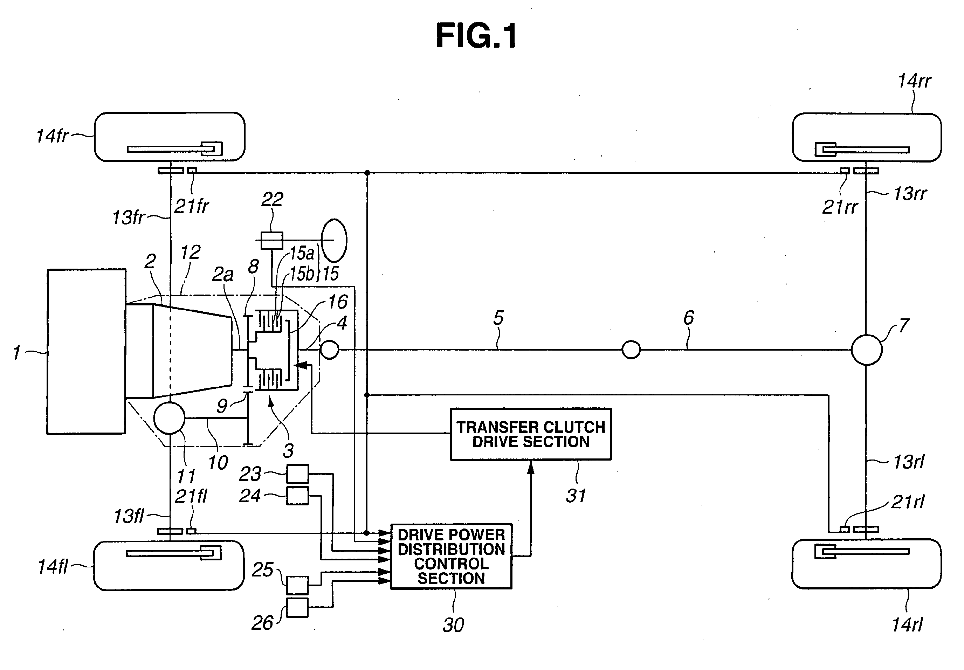

In Fig. 1, reference numeral 1 represents an engine arranged at a front part of a vehicle, and drive power from the engine 1 is transmitted from an automatic transmission (illustrated also including a torque converter) 2 behind the engine 1, via a transmission output shaft 2a, to a transfer 3.

Further, drive power transmitted to the transfer 3 is input on the one hand to a rear wheel final reduction unit 7 by way of a rear drive shaft 4, propeller shaft 5 and drive pinion shaft section 6, and input to a front wheel final reduction unit 11 by way of a reduction drive gear 8, reduction driven gear 9, and front drive shaft 10 constituting the drive pinion shaft section. Here, the automatic transmission 2, transfer 3 and front wheel final reduction unit 11 etc. are provided integrally inside a case 12.

Also, the drive power input to the rear wheel final reduction unit 7 is transmitted to a rear left wheel 14rl via a rear wheel left drive shaft 13rl, and transmitted to a rear right wheel 14rr via a rear wheel right drive shaft 13rr.

On the other hand, the drive power input to the front wheel final reduction unit 11 is transmitted to a front left wheel 14fl via a front wheel left drive shaft 13fl, and transmitted to a front right wheel 14fr via a front wheel right drive shaft 13fr.

The transfer 3 is comprised of a wet-type multiple disc clutch (transfer clutch) 15 as a variable capacity torque transmission type clutch (clutch means) formed by mutually superimposing drive plates 15a provided at a reduction drive gear 8 side, and driven plates 15b provided at the rear drive shaft 4 side, and a transfer piston 16 for variably supplying engaging force (transfer torque: engaging torque) of the transfer clutch 15.

Accordingly, controlling transfer torque of the transfer clutch 15 by controlling pressing force against the transfer piston 16 provides a four-wheel drive vehicle of front engine/front wheel drive base (FF base) capable of varying torque distribution ratio between front wheels and rear wheels from, for example, 100:0 to 50:50.

Also, pressing force of the transfer piston 16 is operated to a transfer clutch drive section 31 constituting hydraulic circuits having a plurality of solenoid valves. Control signals (signals output according to transfer torque to the solenoid valves) for driving the transfer clutch drive section 31 are output from a drive power distribution control section 30, which will be described later.

The vehicle is provided with sensor types for detecting parameters required for drive power distribution control executed as will be described later by the drive power distribution control section 30. Specifically, vehicle wheel speeds $\omega$fl, $\omega$fr, $\omega$rl, $\omega$rr for each of the vehicle wheels 14fl, 14fr, 14rl, 14rr are detected by wheel speed sensors 21fl, 21fr, 21rl, 21rr, steering wheel angle $\theta$H is detected by a steering wheel angle sensor 22, lateral acceleration actually arising in the vehicle (hereafter referred to as actual lateral acceleration) ($d^2y/dt^2$) is detected by a lateral acceleration sensor 23, yaw rate $\gamma$ actually arising in the vehicle (hereafter referred to as actual yaw rate) is detected by a yaw rate sensor 24, accelerator opening degree $\theta$ACC is detected by an accelerator opening degree sensor 25, engine speed NE is detected by an engine speed sensor 26, and these values are input to the drive power distribution control section 30.

Based on each of the input signals described above, the drive power distribution control section 30 then calculates front and rear wheel drive power distribution used by the transfer clutch 15 as transfer torque TLSD, and outputs to the transfer clutch drive section 31.

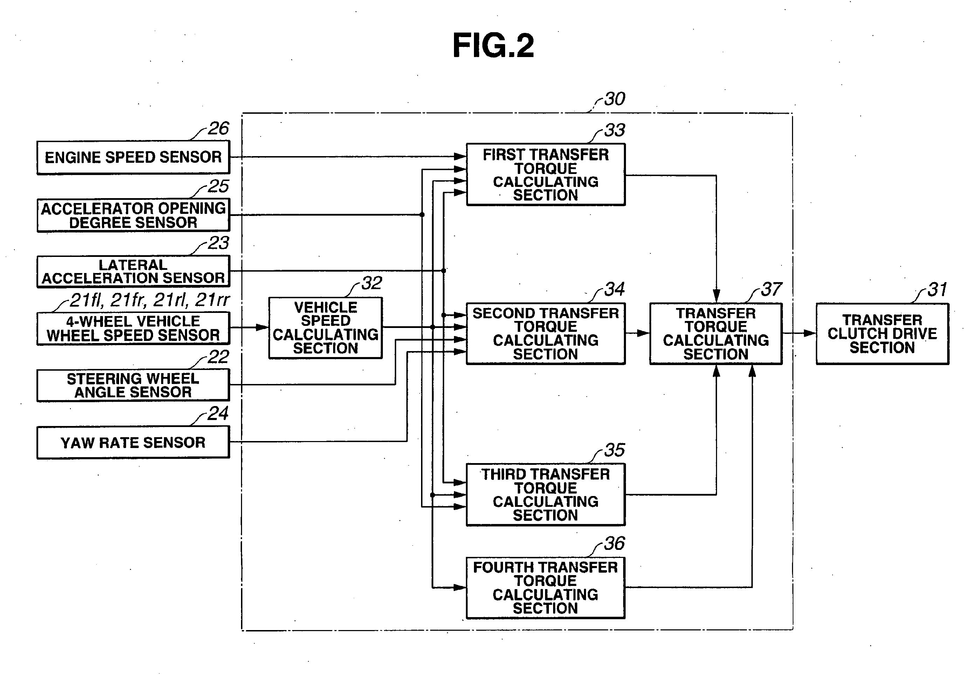

Specifically, as shown in Fig. 2, the drive power distribution control section 30 is mainly made up of a vehicle speed calculating section 32, a first transfer torque calculating section 33, a second transfer torque calculating section 34, a third transfer torque calculating section 35, a fourth transfer torque calculating section 36 and a transfer torque calculating section 37.

The vehicle speed calculating section 32 receives as input wheel speeds $\omega$fl, $\omega$fr, $\omega$rl and $\omega$rr of each of the wheels 14fl, 14fr, 14rl, 14rr from four wheel speed sensors, namely each of the wheel speed sensors 21fl, 21fr, 21rl and 21 rr. Vehicle speed V (=($\omega$fl+$\omega$fr+$\omega$rl+$\omega$rr)/4) is then calculated, for example, by calculating an average of these values, and output to the first transfer torque calculating section 33, second transfer torque calculating section 34, third transfer torque calculating section 35 and fourth transfer torque calculating section 36.

The first transfer torque calculating section 33 is provided constituting engaging toque calculating means and receives as inputs actual lateral acceleration ($d^2y/dt^2$) from the lateral acceleration sensor 23, accelerator opening degree $\theta$ACC from the accelerator opening degree sensor 25, engine speed Ne from the engine speed sensor 26 and vehicle speed V from the vehicle speed calculating section 32. From these input signals, the first transfer torque calculating section 33 then calculates input torque sensing transfer torque TLSDI as engaging torque corresponding to the input torque from the engine and outputs to the transfer torque calculating section 37.

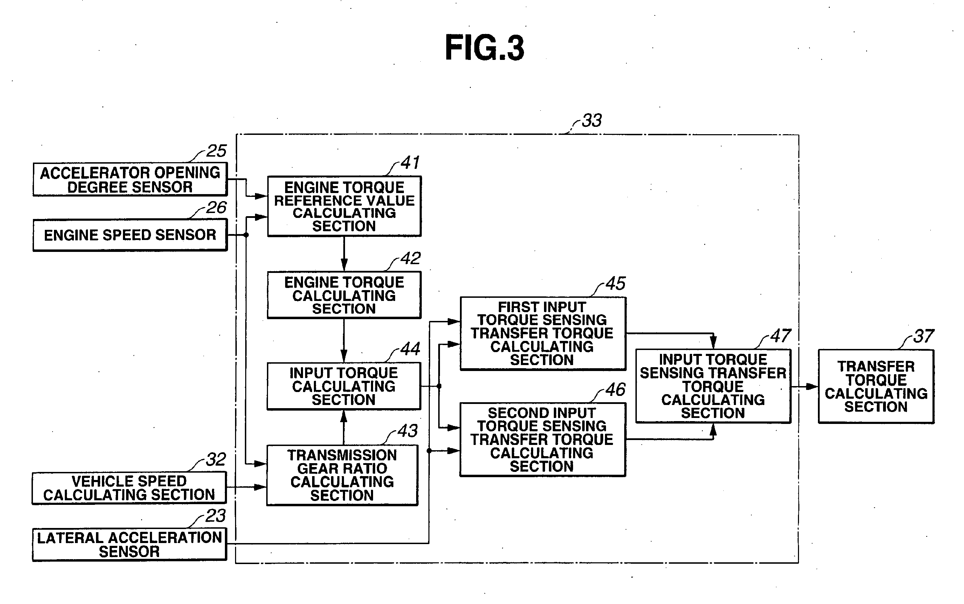

Specifically, as shown in Fig. 3, the first transfer torque calculating section 33 is mainly made up of an engine torque reference value calculating section 41, an engine torque calculating section 42, a transmission gear ratio calculating section 43, an input torque calculating section 44, a first input torque sensing transfer torque calculating section 45, a second input torque sensing transfer torque calculating section 46 and an input torque sensing transfer torque calculating section 47.

The engine torque reference value calculating section 41 receives as inputs the accelerator opening degree

θACC from the accelerator opening degree sensor 25, and engine speed NE from the engine speed sensor 26. Based on the accelerator opening degree θACC and the engine speed NE, the engine torque is obtained by referencing a previously provided engine characteristic map, and this engine torque is output to the engine torque calculating section 42 as engine torque reference value TEGO.

The engine torque calculating section 42 receives as input the engine torque reference value TEGO from the engine torque reference value calculating section 41. Engine torque TEG is then calculated from equation (1) or equation (2) below, and output to the input torque calculating section 44.

■ When TEGO(k)>TEG(k-1) (When engine torque is increasing)

$$TEG = (1/(1+TEGTu \cdot s)) \cdot TEGO \qquad (1)$$

■ When TEGO(k)≦TEG(k-1) (When engine torque is decreasing)

$$TEG = (1/(1+TEGTd \cdot s)) \cdot TEGO \qquad (2)$$

where TEGO(k) is the engine torque reference value this time, TEG(k-1) is engine torque the previous time, s is a differential operator, TEGTu is an engine torque increase side delay time constant (for example, 0.5), and TEGTd is an engine torque decrease side delay time constant (for example, 0.2).

Specifically, a fixed time is taken from operating the accelerator until it shows up in engine torque, and particularly in a supercharged engine, when the accelerator is stepped on, compared to when the accelerator is released time is taken for variation to appear in the engine speed. Taking this into consideration, by having a delay characteristics where delay time constant is varied for when the engine torque is increasing and when engine torque is decreasing, so that delay is made large by setting the delay time constant large when engine torque is increasing and delay is made small by setting the time constant small when engine torque is decreasing, engine torque TEG can be obtained with good precision.

In this way, in estimating engine torque TEG, by using separate time constants for increasing and decreasing engine torque it is possible to appropriately estimate input torque TCD to the transfer clutch 15 which will be described later, according to transition characteristics of the engine, there is only a slight delay in the rising of the input torque TCD when the accelerator is ON, and it is possible to improve cornering.

The transmission gear ratio calculating section 43 receives as inputs the engine speed NE from the engine speed sensor 26, and vehicle speed V from the vehicle speed calculating section 32. Transmission gear ratio GTM is then calculated using the following equation (3) and output to the input torque calculating section 44.

$$GTM = (NE \cdot Rt)/((V/3.6) \cdot Gfin) \qquad (3)$$

where Rt is tire diameter, and Gfin is final gear ratio.

The input torque calculating section 44 receives as inputs engine torque TEG from the engine torque calculating section 42, and transmission gear ratio GTM from the transmission gear ratio calculating section 43. The input torque calculating section 44 calculates input torque TCD from equation (4) below, and outputs the calculated input torque to the first input torque sensing transfer torque calculating section 45, and the second input torque sensing transfer torque calculating section 46.

$$TCD = TEG \cdot GTM \qquad (4)$$

The first input torque sensing transfer torque calculating section 45 receives as inputs the actual lateral acceleration $(d^2y/dt^2)$ from the lateral acceleration sensor 23, and input torque TCD from the input torque calculating section 44, and calculates a first input torque sensing transfer torque TLSDI1 from either of the following equations (5) to (8) according to the actual lateral acceleration $(d^2y/dt^2)$.

■ When

$$(d^2y/dt^2) \leqq (d^2yL/dt^2)$$
$$TLSDI1 = TBRL1 \cdot |TCD| \qquad (5)$$

■ When

$$(d^2yL/dt^2) < (d^2y/dt^2) \leqq (d^2yM/dt^2)$$
$$TLSDI1 = TBRL1 \cdot |TCD| \cdot ((d^2yM/dt^2)-(d^2y/dt^2))$$
$$/((d^2yM/dt^2)-(d^2yL/dt^2))$$
$$+TBRM1 \cdot |TCD| \cdot ((d^2y/dt^2)-(d^2yL/dt^2))$$
$$/((d^2yM/dt^2)-(d^2yL/dt^2)) \qquad (6)$$

■ When

$$(d^2yM/dt^2) < (d^2y/dt^2) \leqq (d^2yH/dt^2)$$
$$TLSDI1 = TBRM1 \cdot |TCD| \cdot ((d^2yH/dt^2)-(d^2y/dt^2))$$
$$/((d^2yH/dt^2)-(d^2yM/dt^2))$$
$$+TBRH1 \cdot |TCD| \cdot ((d^2y/dt^2)-(d^2yM/dt^2))$$
$$/((d^2yH/dt^2)-(d^2yM/dt^2)) \qquad (7)$$

■ When

$$(d^2y/dt^2) > (d^2yH/dt^2)$$
$$TLSDI1 = TBRH1 \cdot |TCD| \qquad (8)$$

where with $(d^2yL/dt^2)$, $(d^2yM/dt^2)$, $(d^2yH/dt^2)$ respectively set in advance by experimentation etc., $(d^2yL/dt^2) < (d^2yM/dt^2) < (d^2yH/dt^2)$, for example, $(d^2yL/dt^2)=1$, $(d^2yM/dt^2)=3$, $(d^2yH/dt^2)=9$.

Also, TBRL1, TBRM1, TBRH1 are input torque sensing proportional constants, and set in advance through experimentation etc., then TBRL1>TBRM1>TBRH1, for example, TBRL1=0.4, TBRM1=0.3, TBRH1=0.2.

Specifically, when $(d^2y/dt^2) \leqq (d^2yL/dtb^2)$, first input torque sensing transfer torque TLSDI1 is calculated using input torque sensing proportional constant TBRL1.

Also, when $(d^2yL/dt^2)<(d^2y/dt^2) \leqq (d^2yM/dt^2)$, first input torque sensing transfer torque TLSDI1 is calculated by interpolating between $(d^2yL/dt^2)$ and $(d^2yM/dt^2)$ using input torque sensing proportional constants TBRL1 and TBRM1.

Further, when $(d^2yM/dt^2)<(d^2y/dt^2) \leqq (d^2yH/dt^2)$, first input torque sensing transfer torque TLSDI1 is calculated by interpolating between $(d^2yM/dt^2)$ and $(d^2yH/dt^2)$ using input torque sensing proportional constants TBRM1 and TBRH1.

Also, when $(d^2y/dt^2)>(d^2yH/dt^2)$ first input torque sensing transfer torque TLSDI1 is calculated using input torque sensing proportional constant TBRH1.

The second input torque sensing transfer torque calculating section 46 receives as inputs the actual lateral acceleration $(d^2y/dt^2)$ from the lateral acceleration sensor 23, and input torque TCD from the input torque calculating section 44, and calculates a second input torque sensing transfer torque TLSDI2 from either of the following equations (9) to (13) according to the actual lateral acceleration ($d^2y/dt^2$).

■ When

$$\text{TCD} \leqq \text{TCD0}$$

$$\text{TLSDI2=0} \tag{9}$$

■ When

$$(d^2y/dt^2) \leqq (d^2yL/dt^2)$$

$$\text{TLSDI2} = \text{TBRL2} \cdot (\text{TCD} - \text{TCD0}) \tag{10}$$

■ When

$$(d^2yL/dt^2) < (d^2y/dt^2) \leqq (d^2yM/dt^2)$$

$$\text{TLSDI2} = \text{TBRL2} \cdot (\text{TCD-TCD0}) \cdot ((d^2yM/dt^2) - (d^2y/dt^2))$$
$$/ ((d^2yM/dt^2) - (d^2yL/dt^2))$$
$$+ \text{TBRM2} \cdot (\text{TCD-TCD0}) \cdot ((d^2y/dt^2) - (d^2yL/dt^2))$$
$$/ ((d^2yM/dt^2) - (d^2yL/dt^2)) \tag{11}$$

■ When

$$(d^2yM/dt^2) < (d^2y/dt^2) \leqq (d^2yH/dt^2)$$

$$\text{TLSDI2} = \text{TBRM2} \cdot (\text{TCD-TCD0}) \cdot ((d^2yH/dt^2) - (d^2y/dt^2))$$
$$/ ((d^2yH/dt^2) - (d^2yM/dt^2))$$

$$+ \text{TBRH2} \cdot (\text{TCD-TCD0}) \cdot ((d^2y/dt^2) - (d^2yM/dt^2))$$
$$/ ((d^2yH/dt^2) - (d^2yM/dt^2)) \tag{12}$$

■ When

$$(d^2y/dt^2) > (d^2yH/dt^2)$$

$$\text{TLSDI2} = \text{TBRH2} \cdot (\text{TCD-TCD0}) \tag{13}$$

where TCD0 is a constant set in advance, and when less than this input torque value it represents a branch point for input torque for which it can be determined that grip driving will be easy to achieve. Also, TBRL2,TBRM2,TBRH2 are input torque sensing proportional constants, and set in advance through experimentation etc., then TBRL2>TBRM2>TBRH2, for example, TBRL2=0.2, TBRM2= 0.1, TBRH2=0.

Specifically, the second input torque sensing transfer torque TLSDI2 is larger than TCD0, is set in a region of input torque TCD where the role of the transfer 3 will be required more, and when $(d^2y/dt^2) \leqq (d^2yL/dt^2)$ the second input torque sensing transfer torque TLSDI2 is calculated using input torque sensing proportional constant TBRL2.

Also, when $(d^2yL/dt^2)<(d^2y/dt^2)\leqq(d^2yM/dt^2)$, second input torque sensing transfer torque TLSDI2 is calculated by interpolating between $(d^2yL/dt^2)$ and $(d^2yM/dt^2)$ using input torque sensing proportional constants TBRL2 and TBRM2.

Further, when $(d^2yM/dt^2) < (d^2y/dt^2) \leqq (d^2yH/dt^2)$, second input torque sensing transfer torque TLSDI2 is calculated by interpolating between $(d^2yM/dt^2)$ and $(d^2yH/dt^2)$ using input torque sensing proportional constants TBRM2 and TBRH2.

Also, when $(d^2y/dt^2,)>(d^2yH/dt^2)$, second input torque sensing transfer torque TLSDI2 is calculated using input torque sensing proportional constant TBRH2.

The input torque sensing transfer torque calculating section 47 receives as inputs the first input torque sensing transfer torque TLSDI1 from the first input torque sensing transfer torque calculating section 45, and the second input torque sensing transfer torque TLSDI2 from the second input torque sensing transfer torque calculating section 46. Input torque sensing transfer torque TLSDI is then calculated using equation (14) below, and output to the transfer torque calculating section 37.

$$TLSDI = TLSDI1 + TLSDI2 \qquad\qquad (14)$$

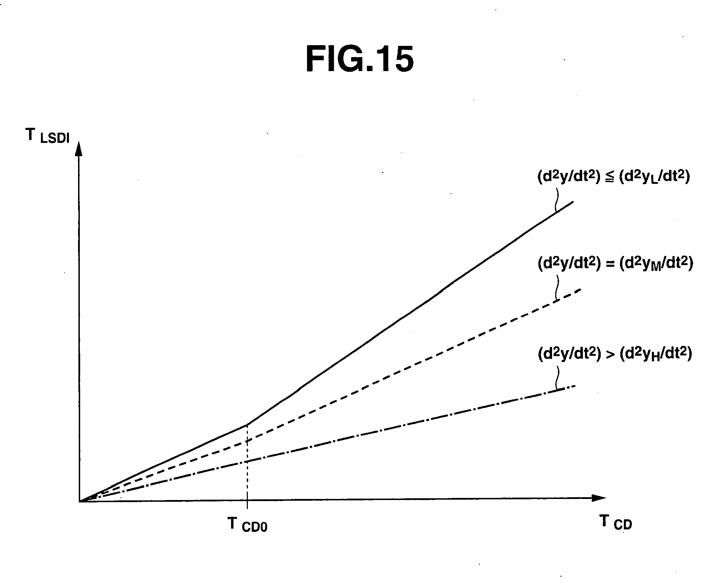

In this manner, the characteristic of the input torque sensing transfer torque TLSDI calculated by the first transfer torque calculating section 33 is shown in Fig. 15. With the input torque sensing transfer torque TLSDI used in this embodiment, when obtaining transfer torque TLSD for the transfer clutch 15, in a region where input torque TCD is large, amount of variation is changed by adding the second input torque sensing transfer torque TLSDI2, and a larger transfer torque is added so that limited slip differential force is not insufficient when critical traveling at a low μ road like snow road and road that get wet and is slippery. Also, for actual lateral acceleration $(d^2y/dt^2)$ by preparing three torque lines as reference, it is possible to realize suitable travel on low μ road travel and high μ road simply. Incidentally, with this embodiment the branch point TCD0 is set and a region of input torque TCD larger than this is set as a region where input torque sensing transfer torque TLSDI changes significantly, but it is also possible, for example, to set so that as input torque TCD becomes large the amount of variation of input torque sensing transfer torque TLSDI becomes large, using quadratic curves etc.

The second transfer torque calculating section 34 is provided constituting engaging torque calculating means and receives as inputs steering wheel angle θH from the steering wheel angle sensor 22, actual lateral acceleration $(d^2y/dt^2)$ from the lateral acceleration sensor 23, actual yaw rate γ from the yaw rate sensor 24 and vehicle speed V from the vehicle speed calculating section 32. The second transfer torque calculating section 34 then estimates a yaw moment applied to the vehicle from these input signals and calculates steering angle/yaw rate sensing transfer torque TLSDP as engaging torque corresponding to this yaw moment, and outputs to the transfer torque calculating section 37.

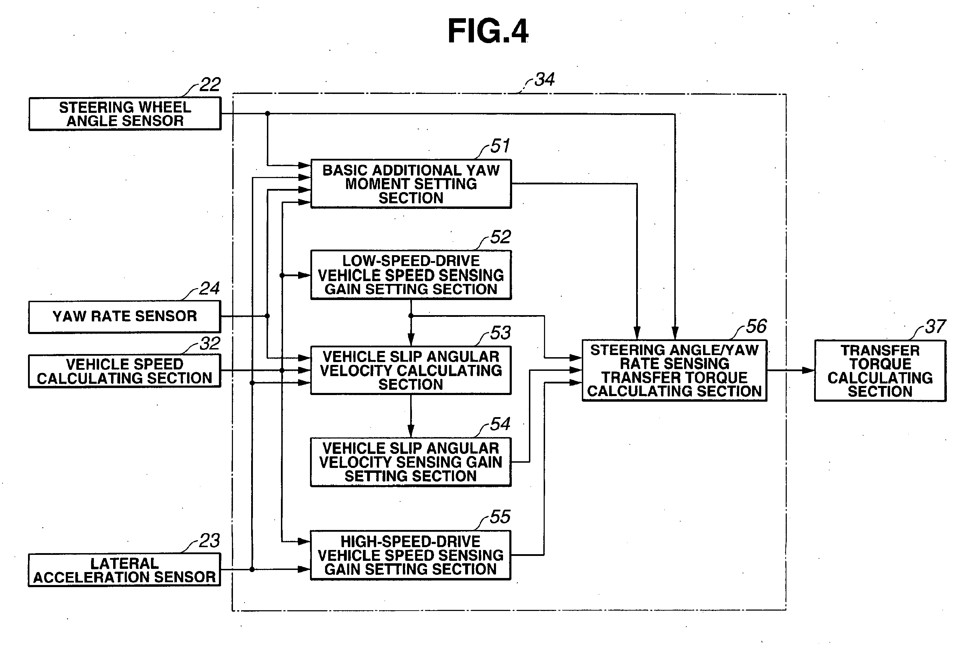

Specifically, as shown in Fig. 4, the second transfer torque calculating section 34 mainly comprises a basic additional yaw moment setting section 51, a low-speed-drive vehicle speed sensing gain setting section 52, a vehicle slip angular velocity calculating section 53, a vehicle slip angular velocity sensing gain setting section 54, a high-speed-drive vehicle speed sensing gain setting section 55, and a steering angle/yaw rate sensing transfer torque calculating section 56.

The basic additional yaw moment setting section 51 receives as inputs steering wheel angle θH from the steering wheel angle sensor 22, $(d^2y/dt^2)$ from the lateral acceleration sensor 23, and actual yaw rate γ from the yaw rate sensor 24. On the basis of these signals the basic additional yaw moment Mzθ is then calculated, and output to the steering angle/yaw rate sensing transfer torque calculating section 56.

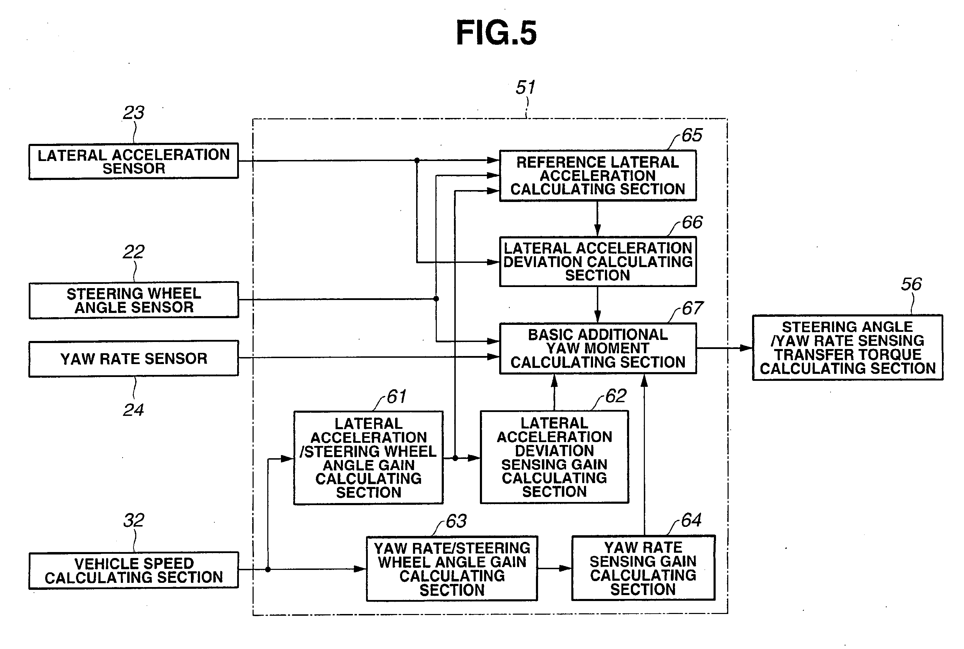

The configuration of the basic additional yaw moment setting section 51 will be described in the following based on Fig. 5. The basic additional yaw moment setting section 51 is mainly comprised of a lateral acceleration/steering wheel angle gain calculating section 61, a lateral acceleration deviation sensing gain calculating section 62, a yaw rate/steering wheel angle gain calculating section 63, a yaw rate sensing gain calculating section 64, a reference lateral acceleration calculating section 65, a lateral acceleration deviation calculating section 66 and a basic additional yaw moment calculating section 67.

The lateral acceleration/steering wheel angle gain calculating section 61 receives as input vehicle speed V from the vehicle speed calculating section 32, calculates lateral acceleration/steering wheel angle gain Gy using equation (15) below, and outputs to the lateral acceleration deviation sensing gain calculating section 62 and the reference lateral acceleration calculating section 65.

$$Gy=(1/(1+A \cdot V^2)) \cdot (V^2/L) \cdot (1/n) \qquad (15)$$

where A is stability factor, L is wheelbase and n is steering gear ratio.

The lateral acceleration deviation sensing gain calculating section 62 receives as input lateral acceleration/ steering wheel angle gain Gy from the lateral acceleration/steering wheel angle gain calculating section 61. Then, in a state where steering is not completely effective on a road of extremely low $\mu$ ($\gamma$=0, (d²y/dt²)=0), lateral acceleration deviation sensing gain Ky is calculated using equation (16) below, with a criterion being that a value where Mzθ (steady value) = 0 is a maximum value, and outputs to the basic additional yaw moment calculating section 67.

$$Ky=K\theta/Gy \qquad (16)$$

The yaw rate/steering wheel angle gain calculating section 63 receives as input vehicle speed V from the vehicle speed calculating section 32. Yaw rate/steering wheel angle gain G$\gamma$ is then calculated using equation (17) below, and outputs to the yaw rate sensing gain calculating section 64.

$$G\gamma=(1/(1+A \cdot V^2)) \cdot (V/L) \cdot (1/n) \qquad (17)$$

The yaw rate sensing gain calculating section 64 receives as input yaw rate/steering wheel angle gain G$\gamma$ from the yaw rate/steering wheel angle gain calculating section 63. Then, taking into consideration yaw rate sensing gain K$\gamma$ that becomes Mzθ (steady value) = 0 at the time of grip driving (lateral acceleration deviation (d²ye/dt²)= 0), setting is performed using equation (18) below, and outputs to the basic additional yaw moment calculating section 67.

$$K\gamma=K\theta/G\gamma \qquad (18)$$

where Kθ is steering angle sensing gain, and is obtained from the following equation (19).

$$K\theta=(Lf \cdot Kf)/n \qquad (19)$$

where Lf is the distance between the front axle and the center of gravity, and Kf is equivalent cornering power of the front axle.

The reference lateral acceleration calculating section 65 receives as inputs steering wheel angle θH from the steering wheel angle sensor 22, actual lateral acceleration (d²y/dt²) from the lateral acceleration sensor 23, and lateral acceleration/steering wheel angle gain Gy from the lateral acceleration/steering wheel angle gain calculating section 61. Reference lateral acceleration (d²yr/dt²) representing a relationship between estimated lateral acceleration and actual lateral acceleration is then calculated using the following equation (20) based on a linear vehicle dynamic model from the driving conditions of the vehicle.

$$(d^2yr/dt^2)=(1/(1+Ty \cdot s)) \cdot (d^2yss/dt^2) \qquad (20)$$

where s is a differential operator, Ty is a primary delay time constant for lateral acceleration, (d²yss/dt²) is a signed reference lateral acceleration not taking account of delay, and this signed reference lateral acceleration not taking account of delay (d²yss/dt²) is set in the following manner.

■ When

$$\theta_H \geqq 0$$

$$(d^2yss/dt^2) = (d^2ysm/dt^2) \qquad (21)$$

■ When

$$\theta_H < 0$$

$$(d^2yss/dt^2) = - (d^2ysm/dt^2) \qquad (22)$$

where $(d^2ysm/dt^2)$ is unsigned reference lateral acceleration that will be saturated by $(d^2yx/dt^2)$ which will be described later.

Specifically, $(d^2yx/dt^2)$ is pseudo lateral acceleration causing saturation of the reference lateral acceleration, and is calculated using equation (23) or equation (24) below.

■ When

$$(d^2y/dt^2) < 0$$

$$(d^2yx/dt^2) = Gy \cdot \theta_{HMax} \cdot ((10 - (d^2y/dt^2))/10)$$

$$+ (d^2y/dt^2) \qquad (23)$$

■ When

$$(d^2y/dt^2) \geqq 0$$

$$(d^2yx/dt^2) = 10 \qquad (24)$$

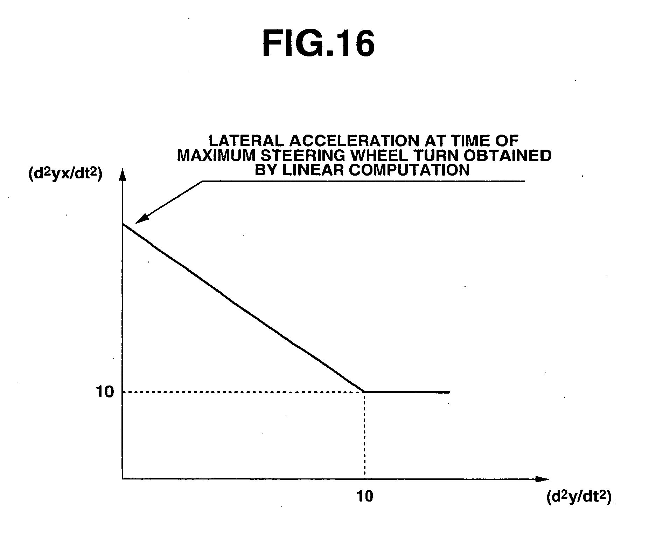

where $\theta_{HMax}$ is maximum steering angle. If this pseudo lateral acceleration $(d^2yx/dt^2)$ causing saturation of reference lateral acceleration set using equation (23) or equation (24) is shown as a characteristic diagram, it will be as shown in Fig. 16, and with this embodiment, for example, saturation occurs at 10m/s$^2$.

Also, unsigned lateral acceleration linearly calculated for steering wheel angle is made as $(d^2ysl/dt^2)$, and calculated using the following equation (25).

$$(d^2ysl/dt^2) = Gy \cdot |\theta_H| \qquad (25)$$

If a difference of $(d^2yx/dt^2)$ from $(d^2ysl/dt^2)$ is made as $(d^2yd/dt^2)$ $(=(d^2ysl/dt^2) - (d^2yx/dt^2))$, unsigned reference lateral acceleration $(d^2ysm/dt^2)$ saturated by $(d^2yx/dt^2)$ is calculated using the following equation (26) or equation (27).

■ When

$$(d^2yd/dt^2) > 0$$

$$(d^2ysm/dt^2) = (d^2ysl/dt^2) - (d^2yd/dt^2) \qquad (26)$$

■ When

$$(d^2yd/dt^2) \leqq 0$$
$$(d^2ysm/dt^2) = (d^2ysl/dt^2) \tag{27}$$

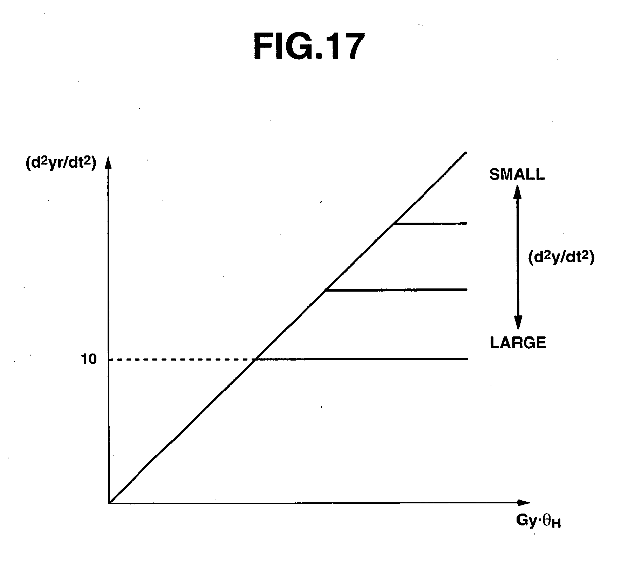

In this way, a characteristic for reference lateral acceleration ($d^2yr/dt^2$) representing a relationship between lateral acceleration estimated based on a linear vehicle dynamic model from the set driving conditions of the vehicle and actual lateral acceleration is as shown in Fig. 17, and with respect to the reference lateral acceleration ($d^2yr/dt^2$), in a relationship to ($Gy \cdot \theta H$), when road surface $\mu$ is high and actual lateral acceleration ($d^2y/dt^2$) is large, reference lateral acceleration is controlled to a small value, while conversely when road surface $\mu$ is low and actual lateral acceleration ($d^2y/dt^2$) is small, it is set so as to be large value. By setting reference lateral acceleration ($d^2yr/dt^2$) in this way, when calculating basic additional yaw moment $Mz\theta$, containing reference lateral acceleration ($d^2yr/dt^2$), in the basic additional yaw moment calculating section 67, which will be described later, an excessive turning moment when turning severely on a low $\mu$ road is prevented.

The lateral acceleration deviation calculating section 66 receives as inputs actual lateral acceleration ($d^2y/dt^2$) from the lateral acceleration sensor 23, and reference lateral acceleration ($d^2yr/dt^2$) from the reference lateral acceleration calculating section 65. Lateral acceleration deviation ($d^2ye/dt^2$) is then calculated using equation (28) below, and outputs to the basic additional yaw moment calculating section 67.

$$(d^2ye/dt^2) = (d^2y/dt^2) - (d^2yr/dt^2) \tag{28}$$

The basic additional yaw moment calculating section 67 receives as inputs steering wheel angle $\theta H$ from the steering wheel angle sensor 22, actual yaw rate $\gamma$ from the yaw rate sensor 24, lateral acceleration deviation sensing gain Ky from the lateral acceleration deviation sensing gain calculating section 62, yaw rate sensing gain $K\gamma$ from the yaw rate sensing gain calculating section 64, and lateral acceleration deviation ($d^2ye/dt^2$) from the lateral acceleration deviation calculating section 66.

Basic additional yaw moment $Mz\theta$ is then calculated from equation (29) below, and outputs to the steering angle/yaw rate sensing transfer torque calculating section 56.

$$Mz\theta = -K\gamma \cdot \gamma + Ky \cdot (d^2ye/dt^2) + K\theta \cdot \theta H \tag{29}$$

Specifically, as shown in equation (29), the term $-K\gamma \cdot \gamma$ is yaw moment sensed on yaw rate $\gamma$, the term $K\theta \cdot \theta H$ is yaw moment sensed on steering angle $\theta H$, and the term $Ky \cdot (d^2ye/dt^2)$ is a corrected value for yaw moment. Therefore, in the case of steering with a large lateral acceleration ($d^2y/dt^2$) on a high $\mu$ road, the additional yaw moment $Mz\theta$ is also a large value and it is possible to improve driving performance. On the other hand, with travel on a low $\mu$ road, with respect to additional yaw moment $Mz\theta$, cornering becomes good because additional yaw moment $Mz\theta$ is reduced by the correction operation described above, and stable driving performance is obtained.

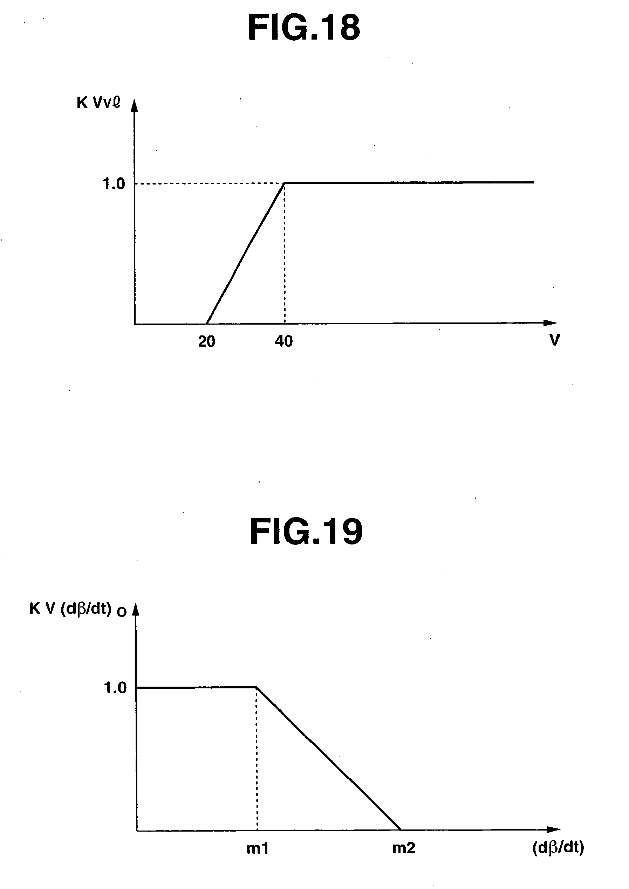

Returning to Fig. 4, the low-speed-drive vehicle speed sensing gain setting section 52 receives as input vehicle speed V from the vehicle speed calculating section 32. Then, referring to the map shown in Fig. 18 for example, low-speed-drive vehicle speed sensing gain KVv1 is set, and outputs to the vehicle slip angular velocity calculating section 53 and the steering angle/yaw rate sensing transfer torque calculating section 56.

As is clear from Fig. 18, this low-speed-drive vehicle speed sensing gain KVv1 is set low in order to avoid unnecessary additional yaw moment $MVz\theta$ at extremely low speed. In particular, at 20 km/h or less, low-speed-drive vehicle speed sensing gain KVv1 is set to 0, so that controlled additional yaw moment $MVz\theta$ does not act.

The vehicle slip angular velocity calculating section 53 receives as inputs actual lateral acceleration ($d^2y/dt^2$) from the lateral acceleration sensor 23, actual yaw rate $\gamma$ from the yaw rate sensor 24, vehicle speed V from the vehicle speed calculating section 32, and low-speed-drive vehicle speed sensing gain KVv1 from the low-speed-drive vehicle speed sensing gain setting section 52.

Vehicle slip angular velocity ($d\beta/dt$) is calculated using equation (30) below, and the vehicle slip angular velocity calculating section 53 outputs to the vehicle slip angular velocity sensing gain setting section 54.

$$(d\beta/dt) = KVv1 \cdot |((d^2y/dt^2)/V) - \gamma| \qquad (30)$$

The vehicle slip angular velocity sensing gain setting section 54 receives as input vehicle slip angular velocity (dβ /dt) from the vehicle slip angular velocity calculating section 53.

Then, basic vehicle slip angular velocity sensing gain KV (dβ/dt)0 and return gradient limited vehicle slip angular velocity sensing gain KV (dβ/dt)L are calculated, and in a range not exceeding 1.0 the smaller of the two is set as vehicle slip angular velocity sensing gain KV (dβ /dt) and output to the steering angle/yaw rate sensing transfer torque calculating section 56.

Specifically, the basic vehicle slip angular velocity sensing gain KV (dβ/dt)0 is set by referring to the map shown in Fig. 19, for example. As will be clear from Fig. 19, the basic vehicle slip angular velocity sensing gain KV (dβ/dt)0 is set in order to control excessive cornering in a critical region where vehicle slip angular velocity(dβ/dt) is large, and in particular, with a vehicle slip angular velocity (dβ/dt) of m2 or greater is set to 0, and is set so that additional yaw moment MVzθ due to control does not act.

Also, return gradient limited vehicle slip angular velocity sensing gain KV (dβ/dt)L is calculated using equation (31) below.

$$KV(d\beta/dt)L(k) = KV(d\beta/dt)L(k-1) + \Delta KV(d\beta/dt) \cdot \Delta t$$

$$(31)$$

where KV (dβ/dt)L(k)is return gradient limited vehicle slip angular velocity sensing gain for this time, KV (dβ/dt)(k-1) is vehicle slip angular velocity sensing gain for the previous time, ΔKV (dβ/dt) is vehicle slip angular velocity sensing gain return gradient (a constant, for example 0.3), and Δt is calculation period.

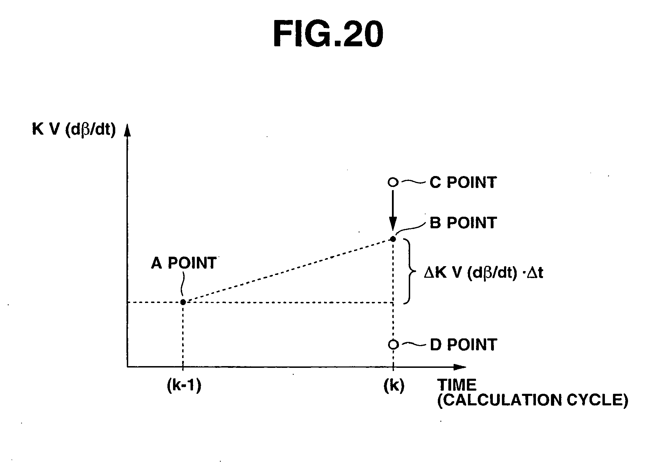

With respect to the return gradient limited vehicle slip angular velocity sensing gain KV (dβ/dt)L expressed by equation (31) above, with the meaning of Fig. 20, if vehicle slip angular velocity sensing gain KV (dβ/dt)(k-1) for the previous time is assumed to be point A, the return gradient limited vehicle slip angular velocity sensing gain KV (dβ /dt) L (k) for this time becomes point B. Because a value that is smaller compared to the basic vehicle slip angular velocity sensing gain KV (dβ/dt)0 is set as the vehicle slip angular velocity sensing gain KV (dβ/dt), in cases such as where basic vehicle slip angular velocity sensing gain KV (dβ/dt)0 is at point C, return gradient limit vehicle slip angular velocity sensing gain KV (dβ/dt)L(k) for this time is set as the vehicle slip angular velocity sensing gain KV (dβ/dt). Conversely, in cases such as where basic vehicle slip angular velocity sensing gain KV (dβ/dt)0 is at point D, the basic vehicle slip angular velocity sensing gain KV (dβ/dt)0 is set as vehicle slip angular velocity sensing gain KV (dβ/dt). Specifically, return gradient limited vehicle slip angular velocity sensing gain KV (dβ/dt)L(k) for this time is set as a limited value.

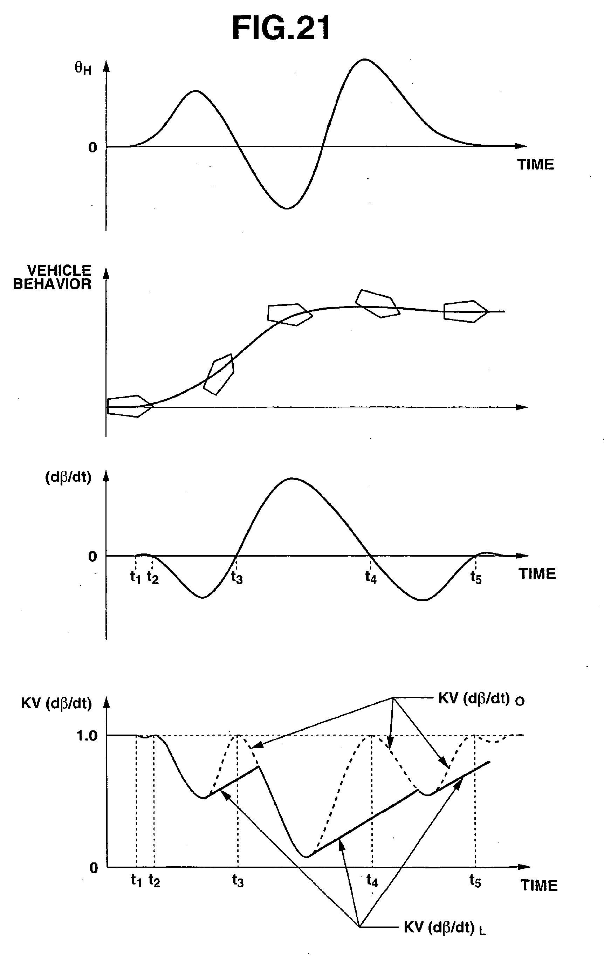

For example, as shown in Fig. 21, consider a case where a driver steers to the left, then to the right, and after that performs counter steering.

At that time, as shown in Fig. 21, vehicle slip angular velocity (dβ/dt) sequentially takes values that are negative - positive - negative, but in a transitional state where the sign is switching like this, the vehicle slip angular velocity (dβ/dt) temporarily generates moment with a small or zero value. Under such conditions, if additional yaw moment MVzθ is inadvertently set using only the basic vehicle slip angular velocity sensing gain KV (dβ/dt)0, transfer torque TLSD becomes an unfavorable zero or small value regardless of the vehicle being in an unstable state (a part of the dotted line in the drawing of KV (dβ/dt)in Fig. 21). Accordingly, by performing control with return gradient limited vehicle slip angular velocity sensing gain KV (dβ/dt)L taking into consideration above transitional state, unnecessary addition of a turning moment in unstable or transitional states of the vehicle is reliably prevented, and it is possible to carry out front and rear drive power distribution with good precision and in a stable manner.

The high-speed-drive vehicle speed sensing gain setting section 55 receives as inputs actual lateral acceleration (d²y/dt ²) from the lateral acceleration sensor 23, and vehicle speed V from the vehicle speed calculating section 32.

Then, first of all a vehicle speed sensing term KVvhv of the high-speed-drive vehicle speed sensing gain KVvh is set using the following equation (32), (33) or (34).

■ When

$$(3.6 \cdot V) \leqq 60$$

$$KVvhv=1 \qquad\qquad (32)$$

■ When

$$60 < (3.6 \cdot V) < 120$$

$$KVvhv=1-(((3.6 \cdot V)-60)/(120-60)) \qquad (33)$$

■ When

$$(3.6 \cdot V) \geqq 120$$

$$KVvhv=0 \qquad\qquad (34)$$

High-speed-drive vehicle speed sensing gain KVvh is set on the following equation (35), (36) or (37), based on the previously mentioned vehicle speed sensing term KVvhv of high-speed-drive vehicle speed sensing gain KVvh.

■When

$$|d^2y/dt^2| \leqq 3$$

$$KVvh=KVvhv \qquad\qquad (35)$$

■When

$$3 < |d^2y/dt^2| < 9$$

$$KVvh=1 \cdot ((|d^2y/dt^2|-3)/(9-3))$$
$$+KVvhv \cdot ((9-|d^2y/dt^2|)/(9-3)) \qquad (36)$$

■When

$$|d^2y/dt^2| \geqq 9$$

$$KVvh=1 \qquad\qquad (37)$$

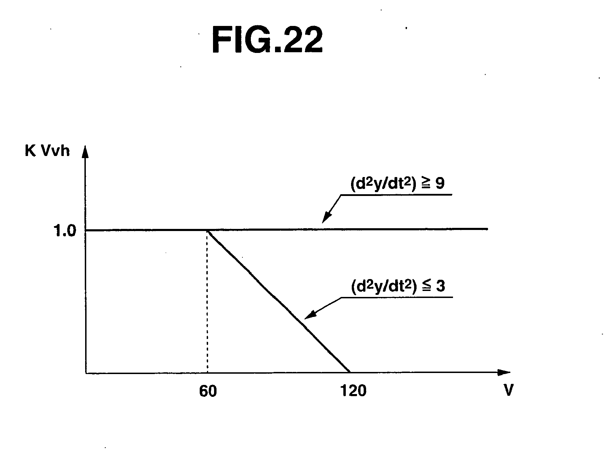

A characteristic drawing for the high-speed-drive vehicle speed sensing gain KVvh acquired using the previolusly mentioned equations (35) to (37) is shown in Fig. 22. Specifically, when an absolute value of actual lateral acceleration in high speed drive $|d^2y/dt^2|$ is low( $|d^2y/dt^2| \leqq 3$), and there is a possibility of low $\mu$ road travel, in order to suppress excessive cornering the high-speed-drive vehicle speed sensing gain KVvh is set to a small value.

The steering wheel angle/yaw rate sensing transfer torque calculating section 56 receives as input steering wheel angle θ H from the steering wheel angle sensor 22, basic additional yaw moment Mzθ from the basic additional yaw moment setting section 51, low-speed- drive vehicle speed sensing gain KVvl from the low-speed-drive vehicle speed sensing gain setting section 52, vehicle slip angular velocity sensing gain KV (dβ/dt) from the vehicle slip angular velocity sensing gain setting section 54, and high-speed-drive vehicle speed sensing gain KVvh from the high-speed-drive vehicle speed sensing gain setting section 55.

Additional yaw moment MVzθ is then calculated from equation (38) below, steering wheel angle/yaw rate sensing transfer torque TLSDP is calculated from equation (39) or equation (40) below, and the two values are output to the transfer torque calculating section 36.

$$\mathrm{MVz}\boldsymbol{\theta}=\mathrm{KVz}\boldsymbol{\theta}\cdot\mathrm{KVvl}\cdot\mathrm{KVvh}\cdot\mathrm{KV}(\mathrm{d}\boldsymbol{\beta}/\mathrm{dt})\cdot\mathrm{Mz}\boldsymbol{\theta} \qquad (38)$$

where KVzθ is gain resolving an assist amount, and is a constant (for example 1).

■ When

$$\boldsymbol{\theta}_{\mathrm{H}}\geqq 0$$

$$\mathrm{TLSDP}=-\mathrm{KLSDP}\cdot\mathrm{MVz}\boldsymbol{\theta} \qquad (39)$$

■ When

$$\boldsymbol{\theta}_{\mathrm{H}}<0$$

$$\mathrm{TLSDP}=\mathrm{KLSDP}\cdot\mathrm{MVz}\boldsymbol{\theta} \qquad (40)$$

where KLSDP is a conversion factor.

On the other hand, returning to Fig. 2, the third transfer torque calculating section 35 is provided constituting engaging torque calculating means, and receives as inputs actual lateral acceleration (d²y/dt²) from the lateral acceleration sensor 23, accelerator opening degree θACC from the accelerator opening degree sensor 25, and vehicle speed V from the vehicle speed calculating section 32.

Then, when the following conditions are satisfied, tack-in prevention transfer torque TLSDD to be added is calculated using equation (41) below, and output until the following release conditions are established.

Here, execution conditions for calculating and outputting tack-in prevention transfer torque TLSDD are when accelerator opening degree this time is 0, and accelerator opening degree the previous time was larger than 0, and there is a high speed turning state (for example, (d²y/dt²) >3, and V>40km/h).

Also, the release conditions are when accelerator opening degree this time is larger than zero or V≦40km/h.

$$\mathrm{TLSDD}=\mathrm{TLSDD0}\cdot\big((\mathrm{V}-\mathrm{VDoff})/(\mathrm{Vc}-\mathrm{VDoff})\big)$$
$$\cdot\big(\big((\mathrm{d^2y/dt^2})-(\mathrm{d^2y/dt^2})\mathrm{Doff}\big)$$
$$/\big((\mathrm{d^2y/dt^2})\mathrm{c}-(\mathrm{d^2y/dt^2})\mathrm{Doff}\big)\big) \qquad (41)$$

where TLSDD0 is a reference value obtained in advance by experimentation, and is a reference value capable of controlling tack-in when traveling such that with vehicle speed at Vc, lateral acceleration becomes (d²y/dt²) c. Also, VDoff and (d²y /dt²) Doff are respectively vehicle speed and lateral acceleration for releasing tack-in control. Incidentally, equation (41) is only one example of an equation for obtaining tack-in prevention transfer torque TLSDD, and it is also possible to have other equations.

In this manner, in the present embodiment, it is possible to effectively prevent a tack-in phenomenon using feed forward control in response to vehicle speed V and lateral acceleration ($d^2y/dt^2$)utilizing the tack-in prevention transfer torque TLSDD from the third transfer torque calculating section 35.

The tack-in prevention transfer torque TLSDD calculated by the third transfer torque calculating section 35 is then output to the transfer torque calculating section 37.

The fourth transfer torque calculating section 36 is provided as initial torque setting means, and receives as input vehicle speed V from the vehicle speed calculating section 32. Then, a previously set map is referenced, initial torque TLSDH at high speed applied in a high speed region in excess of a predetermined vehicle speed is set, in addition to the above described first transfer torque calculating means 33, second transfer torque calculating means 34 and third transfer torque calculating means 35, and outputs to the transfer torque calculating section 37.

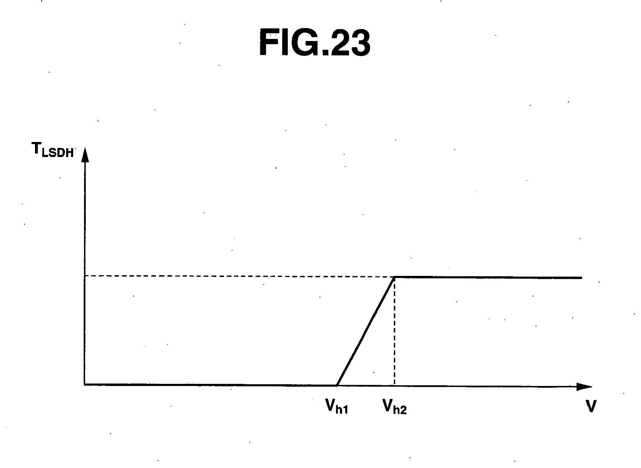

This map of the initial torque TLSDH at high speed is a characteristic as shown in Fig. 23, and is determined in advance by means of experiment and calculation etc. This map is set to 0 in a region where vehicle speed V is lower than Vh1 (for example, 80 km/h) and is set linearly so as to increase gradually from 0 in a region where vehicle speed V is from Vh1 to Vh2 (for example, 120 km/h). The map is set to a predetermined constant value in a region where vehicle speed V higher than Vh2.

Specifically, with this embodiment, since constant initial torque is applied only in a high speed region, not by differential rotation, it is possible to improve stability in a high speed region. Also, in a middle to low speed region, since initial torque is not applied the causing of a tight corner braking phenomenon is prevented without applying unnecessary initial torque.

The transfer torque calculating section 37 is provided as control means, and receives as inputs the input torque sensing transfer torque TLSDI1 from the first transfer torque calculating section 33, steering angle/yaw rate sensing transfer torque TLSDP from the second transfer torque calculating section 34, tack-in prevention transfer torque TLSDD from the third transfer torque calculating section 35, and initial torque at high speed TLSDH from the fourth transfer torque calculating section 36. Transfer torque TLSD is then calculated using equation (42) below, and is output to the transfer clutch drive section 31.

$$TLSD=TLSDI+TLSDP+TLSDD+TLSDH \qquad (42)$$

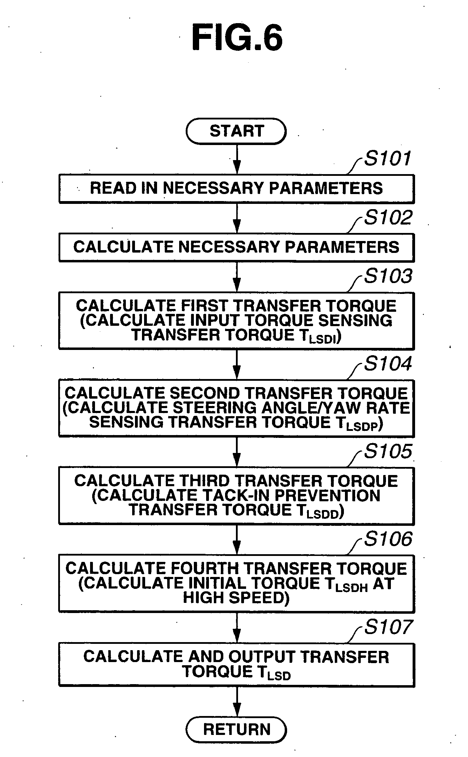

Next, drive power distribution control in the drive power distribution control section 30 having the above described configuration will be described with the flowcharts of Fig. 6 to Fig. 14.

The flowchart of Fig. 6 shows a drive power distribution control program, and first of all, in step (hereafter abbreviated to "S") 101 necessary parameters are read in, namely vehicle wheel speeds $\omega fl$, $\omega fr$, $\omega rl$, $\omega rr$ from the wheel speed sensors 21fl,21fr,21rl,21rr, steering wheel angle $\theta H$ from the steering wheel sensor 22, actual lateral acceleration ($d^2y/dt^2$) from the lateral acceleration sensor 23, actual yaw rate $\gamma$ from the yaw rate sensor 24, accelerator opening degree $\theta ACC$ from the accelerator opening degree sensor 25, and engine speed Ne from the engine speed sensor 26.

Next, processing advances to S102, and necessary parameters, namely vehicle speed V etc., are calculated by the vehicle speed calculating section 32 etc.

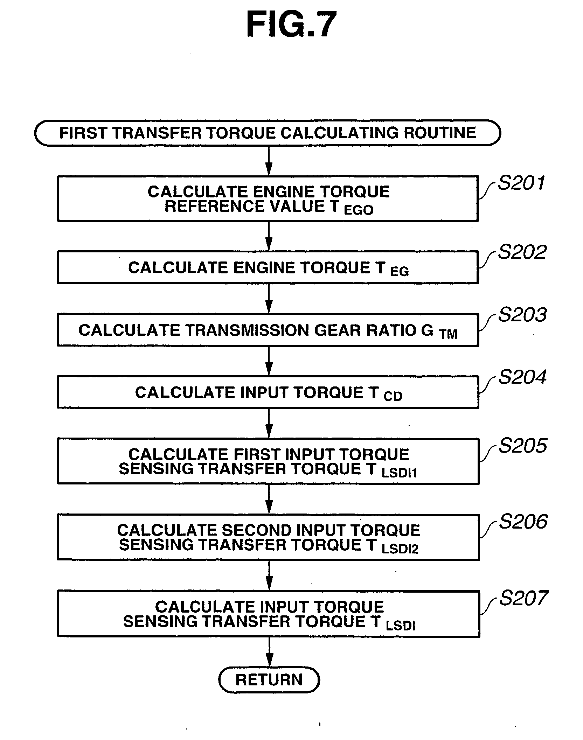

Processing then advances to S103 where the first transfer torque is calculated, and the input torque sensing transfer torque TLSDI is calculated using the first transfer torque calculating section 33. This calculation of the input torque sensing transfer torque TLSDI will be explained later with the flowchart of Fig. 7.

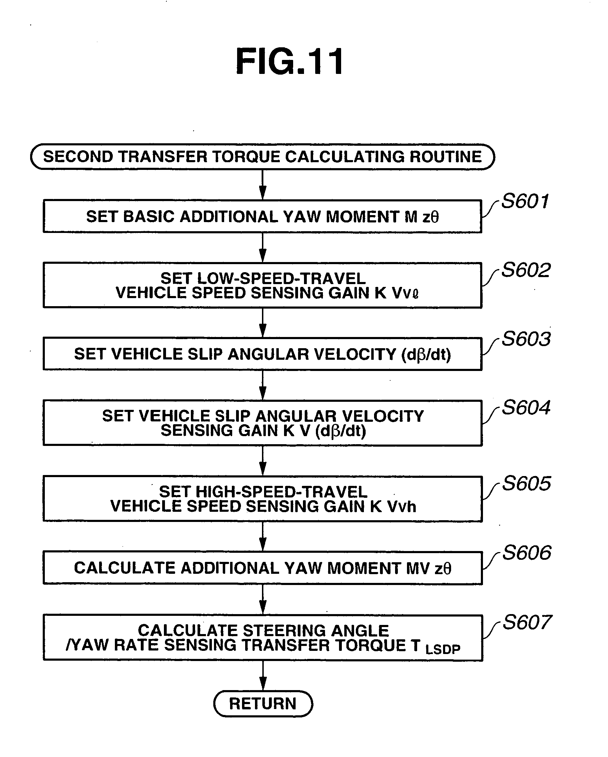

Next, processing advances to S104 where the second transfer torque is calculated, and the steering angle/yaw rate sensing transfer torque TLSDP is calculated using the second transfer torque calculating section 34. This calculation of the steering angle/yaw rate sensing transfer torque TLSDP will be explained later with the flowchart of Fig. 11.

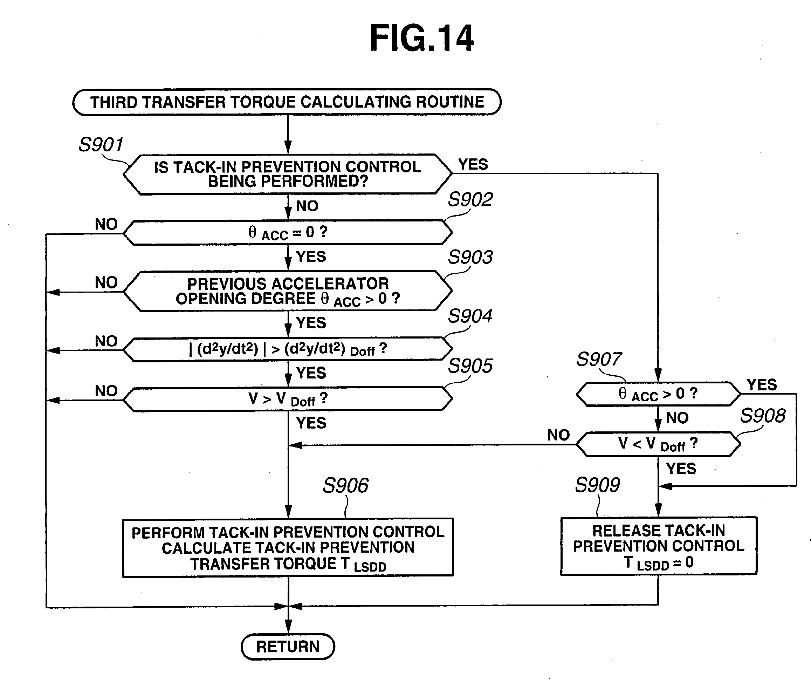

Processing then advances to S105 where the third transfer torque is calculated, and the tack-in prevention transfer torque TLSDD is calculated using the third transfer torque calculating section 34. This calculation of the tack-in prevention transfer torque TLSDD will be explained later with the flowchart of Fig. 14.

Processing then advances to S106 where the fourth transfer torque is calculated, and the initial torque at high speed TLSDH is calculated using the fourth transfer torque calculating section 36.

Next, processing advances to S107 where transfer torque TLSD is calculated by the transfer torque calculating section 37 using the previously mentioned equation (42), this value is output to the transfer clutch drive section 31, and the program exits.

Fig. 7 shows a first transfer torque calculating routine executed by the first transfer torque calculating section 33, and first, in S201, the engine torque reference value calculating section 41 obtains engine torque by referencing an engine characteristic map that has been set in advance, and calculates this engine torque as engine torque reference value TEG0.

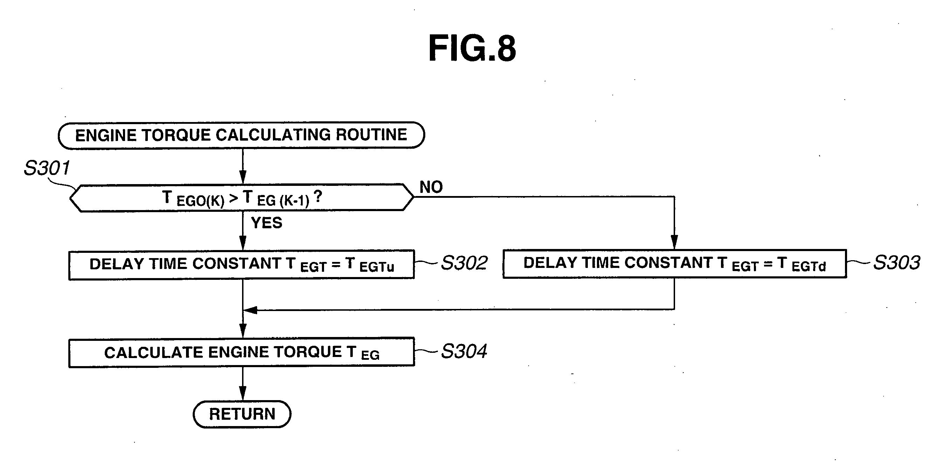

Processing then advances to S202, where the engine torque calculating section 42 calculates engine torque TEG from previously mentioned equation (1) or equation (2). Incidentally, this calculation of the engine torque TEG will be explained later with the flowchart of Fig. 8.

Next, processing advances to S203, where the transmission gear ratio calculating section 43 calculates transmission gear ratio GTM from previously mentioned equation (3). Next, processing advances to S204, where the input torque calculating section 44 calculates input torque TCD from previously mentioned equation (4).

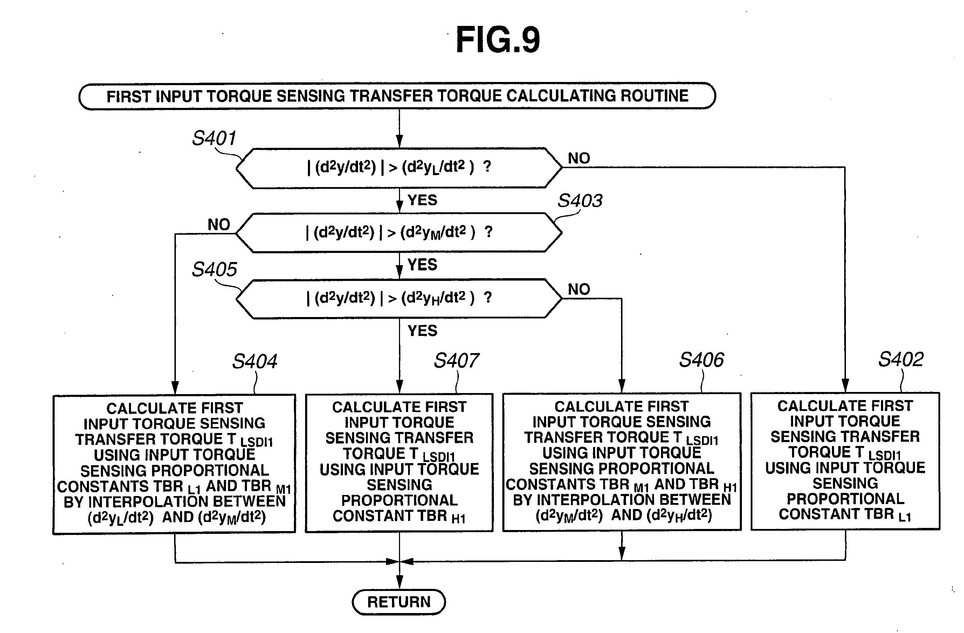

Processing then advances to S205, where the first input torque sensing transfer torque calculating section 45 calculates first input torque sensing transfer torque TLSDI1 from either of the above described equations (5) to (8). This calculation of the first input torque sensing transfer torque TLSDI1 will be explained later with the flowchart of Fig. 9.

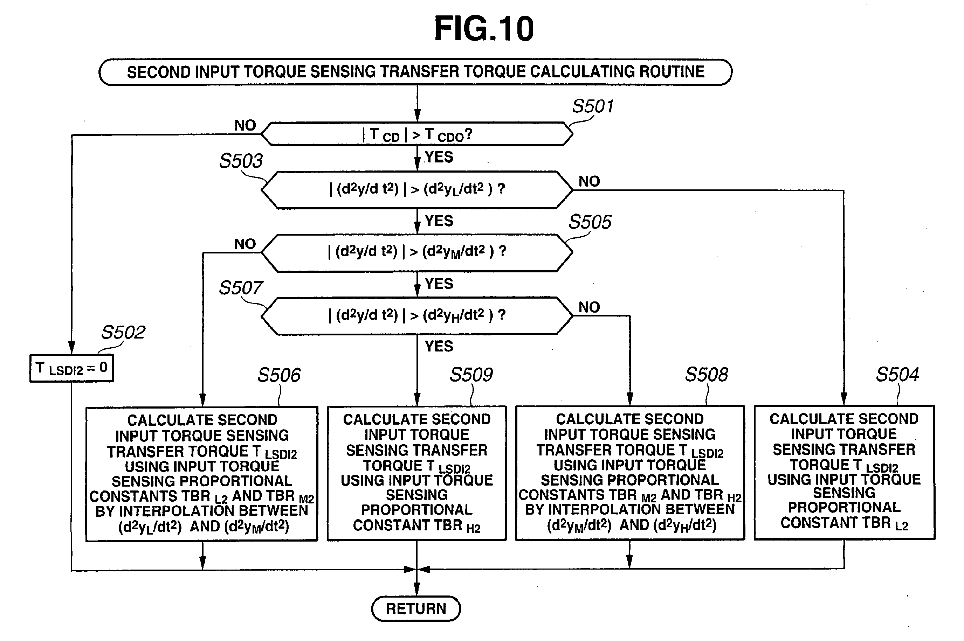

Processing then advances to S206, where the second input torque sensing transfer torque calculating section 46 calculates second input torque sensing transfer torque TLSDI2 from either of the above described equations (9) to (13). This calculation of the second input torque sensing transfer torque TLSDI2 will be explained later with the flowchart of Fig. 10.

Next, processing advances to S207 where the input torque sensing transfer torque calculating section 47 calculates input torque sensing transfer torque TLSDI using the previously mentioned equation (14), and the routine exits.

Fig. 8 shows an engine torque calculating routine executed by the engine torque calculating section 42 in S202 above, and first of all in S301 a comparison is made of the engine torque reference value this time $TEG0(k)$ and the engine torque the previous time $TEG(k-1)$.

As a result of the comparison of S301, when $TEGO(k) > TEG(k-1)$ and it is determined that engine torque is increasing, processing advances to S302 where delay time constant TEGT is set to a delay time constant to the engine torque increasing side TEGTu (for example, 0.5), processing advances to S304 where the engine torque TEG is calculated from above described equation (1) using this engine torque increasing side delay time constant TEGTu, and the routine exits.

As a result of the comparison of S301, when $TEGO(k) \leqq TEG(k-1)$ and it is determined that engine torque is decreasing, processing advances to S303 where delay time constant TEGT is set to a delay time constant to the engine torque decreasing side TEGTd (for example, 0.2), processing advances to S304 where the engine torque TEG is calculated from previously mentioned equation (2) using this engine torque decreasing side delay time constant TEGTd, and the routine exits.

Fig. 9 shows a first input torque sensing transfer torque calculating routine executed by the first input torque sensing transfer torque calculating section 45 in S205 above, and first of all, in S401 comparison is made between actual lateral acceleration $(d^2y/dt^2)$ and a constant $(d^2y L/dt^2)$.

When the result of the comparison of S401 is that the actual lateral acceleration $(d^2y/dt^2)$ is less than or equal to the constant $(d^2y L/dt^2)$ $((d^2y/dt^2) \leqq ((d^2y L/dt^2))$, processing advances to S402 where the first input torque sensing transfer torque TLSDI1 is calculated from equation (5) above using the input torque sensing proportional constant TBRL1, and the routine exits.

Also, if the result of comparison in S401 is that actual lateral acceleration $(d^2y/dt^2)$ is a greater value than the constant $(d^2y L/dt^2)$ $((d^2y/dt^2) > (d^2y L/dt^2))$, processing advances to S403 where comparison is made between actual lateral acceleration $(d^2y/dt^2)$ and the constant $(d^2yM/dt^2)(>(d^2yL/dt^2))$.

When the result of the comparison of S403 is that the actual lateral acceleration $(d^2y/dt^2)$ is less than or equal to the constant $(d^2yM/dt^2)$ $((d^2yL/dt^2) < (d^2y/dt^2) \leqq (d^2yM/dt^2))$, processing advances to S404 where the first input torque sensing transfer torque TLSDI1 is calculated from equation (6) above by interpolation between $(d^2yL/dt^2)$ and $(d^2yM/dt^2)$ using the input torque sensing proportional constants TBRL1 and TBRM1, and the routine exits.

Also, if the result of comparison in S403 is that actual lateral acceleration $(d^2y/dt^2)$ is a greater value than the constant $(d^2yM/dt^2)$ $((d^2y/dt^2) > (d^2yM/dt^2))$, processing advances to S405 where comparison is made between actual lateral acceleration $(d^2y/dt^2)$ and the constant $(d^2yH/dt^2)(> (d^2yM/dt^2))$.

When the result of the comparison of S405 is that the actual lateral acceleration $(d^2y/dt^2)$ is less than or equal to the constant $(d^2yH/dt^2)((d^2yM/dt^2) < (d^2y/dt^2) (d^2yH/dt^2))$, processing advances to S406 where the first input torque sensing transfer torque TLSDI1 is calculated from equation (7) above using the input torque sensing proportional constants TBRM1 and TBRH1 by interpolation between $(d^2yM/dt^2)$ and $(d^2yH/dt^2)$, and the routine exits.

Also, when the result of the comparison of S405 is that the actual lateral acceleration $(d^2y/dt^2)$ is a larger value than the constant $(d^2yH/dt^2)$ $((d^2y/dt^2) > (d^2yH/dt^2))$, processing advances to S407 where the first input torque sensing transfer torque TLSDI1 is calculated from equation (8) above using the input torque sensing proportional constant TBRH1, and the routine exits.

Fig. 10 shows a second input torque sensing transfer torque calculating routine executed by the second input torque sensing transfer torque calculating section 46 in S206 above, and first of all, in S501 comparison is made between input torque TCD and a constant TCD0 that has been set in advance.

When the result of this comparison in S501 is that the input torque TCD is less than or equal to the constant TCD0, $(TCD \leqq TCD0)$, processing advances to S502 where equation (9) above is implemented, namely TLSDI2=0, and the routine exits.

Also, if the result of this comparison in S501 is that the input torque TCD is larger than the constant TCD0 (TCD>TCDO), processing advances to S503.

In S503, comparison between actual lateral acceleration ($d^2y/dt^2$) and the constant ($d^2yL/dt^2$) is carried out. When the result of the comparison of S503 is that the actual lateral acceleration ($d^2y/dt^2$) is less than or equal to the constant ($d^2yL/dt^2$) (($d^2y/dt^2$)$\leqq$($d^2yL/dt^2$)), processing advances to S504 where the second input torque sensing transfer torque TLSDI2 is calculated from equation (10) above using the input torque sensing proportional constant TBRL2, and the routine exits.

Also, if the result of comparison in S503 is that actual lateral acceleration ($d^2y/dt^2$) is a greater value than the constant ($d^2yL/dt^2$)(($d^2y/dt^2$) > ($d^2yL/dt^2$)), processing advances to S505 where comparison is made between actual lateral acceleration ($d^2y/dt^2$) and the constant ($d^2yM/dt^2$) (>($d^2yL/dt^2$)).

When the result of the comparison of S505 is that the actual lateral acceleration ($d^2y/dt^2$) is less than or equal to the constant($d^2yM/dt^2$)(($d^2yL/dt^2$)< ($d^2y/dt^2$)$\leqq$ ($d^2yM/dt^2$)), processing advances to S506 where the second input torque sensing transfer torque TLSDI2 is calculated from equation (11) above using the input torque sensing proportional constants TBRL2 and TBRM2 by interpolation between ($d^2yL/dt^2$) and ($d^2yM/dt^2$), and the routine exits.

Also, if the result of comparison in S505 is that actual lateral acceleration ($d^2y/dt^2$) is a greater value than the constant ($d^2yM/dt^2$) (($d^2y/dt^2$) > ($d^2yM/dt^2$)), processing advances to S507 where comparison is made between actual lateral acceleration ($d^2y/dt^2$) and the constant ($d^2yH/dt^2$)(>($d^2yM/dt^2$)).

When the result of the comparison of S507 is that the actual lateral acceleration ($d^2y/dt^2$) is less than or equal to the constant ($d^2yH/dt^2$) (($d^2yM/dt^2$) < ($d^2y/dt^2$)$\leqq$($d^2yH/dt^2$)), processing advances to S508 where the second input torque sensing transfer torque TLSDI2 is calculated from equation (12) above using the input torque sensing proportional constants TBRM2 and TBRH2 by interpolation between ($d^2yM/dt^2$) and ($d^2yH/dt^2$), and the routine exits.

Also, when the result of the comparison of S507 is that the actual lateral acceleration ($d^2y/dt^2$) is a larger value than the constant ($d^2yH/dt^2$) (($d^2y/dt^2$)>($d^2yH/dt^2$)), processing advances to S509 where the second input torque sensing transfer torque TLSDI2 is calculated from equation (13) above using the input torque sensing proportional constant TBRH2, and the routine exits.

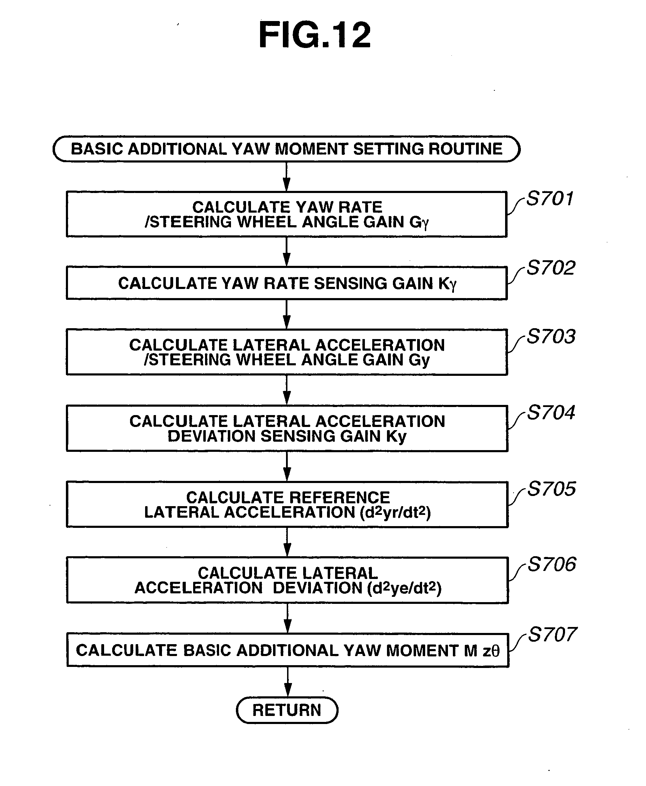

Fig. 11 shows a second transfer torque calculating routine executed by the second transfer torque calculating section 34 in S104 above, and first of all in S601 the basic additional yaw moment setting section 51 sets basic additional yaw moment Mzθ. Incidentally, this setting of the basic additional yaw moment *Mz*θ will be explained later with the flowchart of Fig. 12.

Next, processing advances to S602 where the low-speed-drive vehicle speed sensing gain setting section 52 sets low-speed-drive vehicle speed sensing gain KVvl.

Processing next advances to S603, where the vehicle slip angular velocity calculating section 53 calculates vehicle slip angular velocity ($d\beta/dt$) using equation (30) described above.

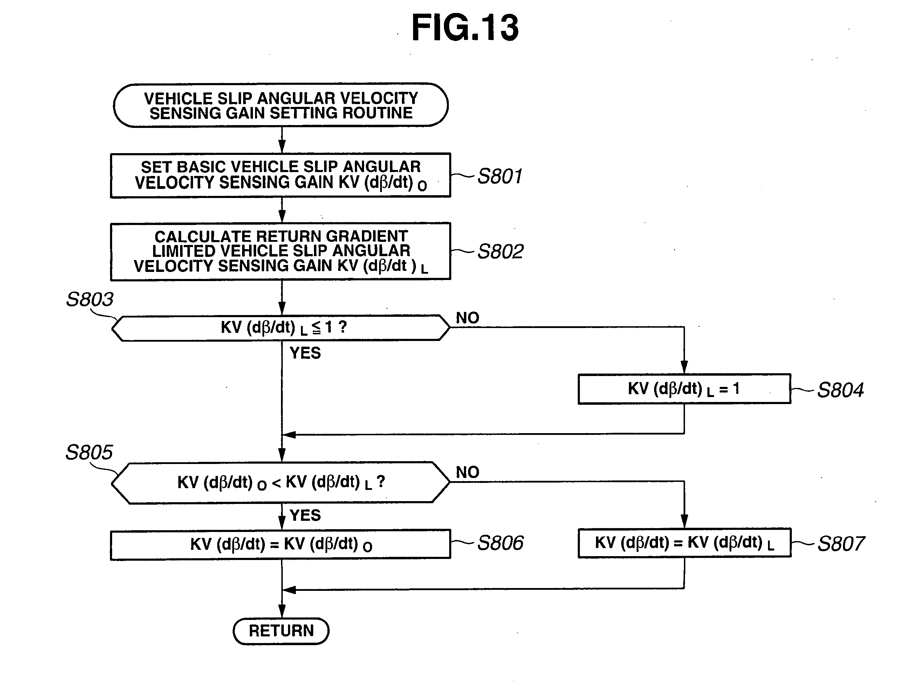

Processing then advances to S604, where the vehicle slip angular velocity sensing gain setting section 54 sets vehicle slip angular velocity sensing gain KV ($d\beta/dt$). The setting of the vehicle slip angular velocity sensing gain KV ($d\beta/dt$) will be described later with the flowchart of Fig. 13.

Next, processing advances to S605 where the high-speed-drive vehicle speed sensing gain setting section 55 sets high-speed-drive vehicle speed sensing gain KVvh.

Processing then advances to S606 and the steering angle/yaw rate sensing transfer torque calculating section 56 calculates additional yaw moment MVzθ from equation (38) above, and advances to S607 where the steering angle/yaw rate sensing transfer torque TLSDP is calculated from equation (39) or (40) above, and the routine exits.

Fig. 12 shows a basic additional yaw moment setting routine executed by the basic additional yaw moment setting section 51 in S601 above, and first of all in S701 the yaw rate/steering wheel angle gain calculating section 63 calculates the yaw rate/steering wheel angle gain Gγ from equation (17) mentioned above.

Next, processing advances to S702, where the yaw rate sensing gain calculating section 64 calculates yaw rate sensing gain Kγ from previously mentioned equation (18).

Processing then advances to S703 where the lateral acceleration/steering wheel angle gain calculating section 61 calculates lateral acceleration/steering wheel angle gain Gy using equation (15) above.

Next processing advances to S704, where the lateral acceleration deviation sensing gain calculating section 62 calculates lateral acceleration deviation sensing gain Ky from equation (16) above.

Next processing advances to S705, where the reference lateral acceleration calculating section 65 calculates reference lateral acceleration ($d^2yr/dt^2$) from equation (20) above.

Processing then advances to S706, where the lateral acceleration deviation calculating section 66 calculates lateral acceleration deviation ($d^2ye/dt^2$) using equation (28) above.

Processing then advances to S707, where the basic additional yaw moment calculating section 67 calculates the basic additional yaw moment Mzθ using equation (29), and the routine exits.

Fig. 13 shows a vehicle slip angular velocity sensing gain setting routine executed by the vehicle slip angular velocity sensing gain setting section 54 in S604 above, and first of all in S801 basic vehicle slip angular velocity sensing gain KV ($d\beta/dt$)0 is set by referencing the map shown in Fig. 19, for example.

Processing next advances to S802, where the return gradient limited vehicle slip angular velocity sensing gain KV (dβ/dt)L is calculated from equation (31) above.

Next, processing advances to S803, where it is determined whether or not the return gradient limited vehicle slip angular velocity sensing gain KV (dβ/dt)L set in S802 is less than or equal to 1, and if it is less than or equal to 1 processing advances directly to S805, while if it is greater than 1 processing advances to S804 where the return gradient limited vehicle slip angular velocity sensing gain KV (dβ /dt)L is made 1 and processing advances to S805.

In S805, the basic vehicle slip angular velocity sensing gain KV (dβ/dt)0 is compared with return gradient limited vehicle angular velocity sensing gain KV (dβ/dt)L, and if basic vehicle slip angular velocity sensing gain KV (dβ/dt)0 is smaller than the return gradient limited vehicle angular velocity sensing gain KV (dβ/dt)L processing advances to S806 where the basic vehicle slip angular velocity sensing gain KV (dβ/dt)0 is set as vehicle slip angular velocity sensing gain KV (dβ/dt), and the routine exits.

Conversely, if basic vehicle slip angular velocity sensing gain KV (dβ/dt)0 is greater than or equal to the return gradient limited vehicle angular velocity sensing gain KV (dβ/dt)L the return gradient limited vehicle angular velocity sensing gain KV (dβ/dt)L is set as vehicle slip angular velocity sensing gain KV (dβ/dt), and the routine exits.

Fig. 14 shows a third transfer torque calculating routine executed by the third transfer torque calculating section 35 in S105 above, and first of all in S901 it is determined whether or not tack-in prevention control is currently being executed.

If the result of determination in S901 is that the tack-in prevention control is not being executed, processing advances to S902 where it is determined whether or not accelerator opening degree θACC is 0. If accelerator opening degree θACC is 0, processing advances to S903, where it is determined whether or not accelerator opening degree θACC the time before was larger than 0, and if it was larger than 0 processing advances to S904, where it is determined whether or not lateral acceleration $(d^2y/dt^2)$ is larger than a set value $(d^2y/dt^2)$ Doff, processing advances to S905 if it is larger than the set value $(d^2y/dt^2$ Doff, where it is determined whether or not vehicle speed V is larger than a set value VDoff, and if vehicle speed V is larger than the VDoff processing advances to S906 where tack-in prevention control is executed, and the routine exits. The tack-in prevention transfer torque TLSDD at this time is calculated using equation (41) above.

Also, if any one of S902 to S905 is not satisfied, the routine exits directly.

On the other hand, if it is determined in S901 that tack-in prevention control is being executed, processing advances to S907 where it is determined whether or not accelerator opening degree this time is greater than 0. If the result of this determination is that the accelerator opening degree this time is larger than 0, processing advances to S909 where the tack-in prevention control is released, the tack-in prevention transfer torque TLSDD is made 0 and the routine exits.

Also, if the determination result in S907 is the accelerator opening degree this time is less than 0 processing advances to S908, where it is determined whether or not vehicle speed V is smaller than a set value VDoff.

If the result of this determination in S909 is that the vehicle speed V is smaller than the set value VDoff, processing advances to S909 where the tack-in prevention control is released, the tack-in prevention transfer torque TLSDD is made 0 and the routine exits.

Conversely, if vehicle speed V is greater than the set value VDoff processing advances to S906 and tack-in prevention control resumes.

With this embodiment of the present invention, when input torque sensing transfer torque TLSDI is obtained, in estimating engine torque TEG, by using separate time constants for increasing and decreasing engine torque it is possible to appropriately estimate input torque TCD to the transfer clutch 15, according to transition characteristics of the engine, there is only a slight delay in the rising of the input torque TCD when the accelerator is ON, and improvement in cornering is possible.

Also, with the input torque sensing transfer torque TLSDI, when obtaining transfer torque TLSD for the transfer clutch 15, in a region where input torque TCD is large, amount of variation is changed by adding the second input torque sensing transfer torque TLSDI2, which means that a larger transfer torque is added so that limited slip differential force is not insufficient when critical traveling at a low μ road, and it is possible to obtain stabilized grip force.

When obtaining input torque sensing transfer torque TLSDI also, for actual lateral acceleration $(d^2y/dt^2)$ by preparing three torque lines as reference, it is possible to achieve conformity of low μ road travel and high μ road travel simply.

Further, since vehicle slip angular velocity sensing gain KV (dβ/dt)controlled by return gradient limited vehicle slip angular velocity sensing gain KV (dβ/dt)L is used in steering angle/yaw rate sensing transfer torque TLSDP calculated with steering angle feed forward control + yaw rate feed back control with lateral acceleration added, addition of an unnecessary turning moments in unstable and transitional states of the vehicle is reliably prevented, and front and rear drive power distribution is carried out with good precision and in a stable manner.

It is also possible to detect a tack-in phenomenon due to a driver's accelerator operation and effectively prevent the tack-in phenomenon using feed forward control.

Further with this embodiment, since constant initial torque is applied only in a high speed region not by differential rotation by the fourth transfer torque calculating means 36, it is possible to improve stability in a high speed region. Also, in a middle to low speed region, since initial torque is not applied the causing of a tight corner braking phenomenon is prevented without applying unnecessary initial torque. In this way, it is possible to ensure stability in a high speed region, while eliminating needless limited slip control in a low speed region, without the addition of complicated computations and sensors.

Incidentally, with this embodiment, description has been given for an example where initial torque at high speed is added for front and rear drive power distribution control, but it is also possible to provide a left and right drive power distribution control device in the front wheel final reduction unit 11 and the rear wheel final reduction unit 7, and similarly adopt the left and right drive power distribution control device to these units (that is, add a constant initial torque in a high speed region).

**Claims**

1. A drive power distribution control device (30) for a vehicle, for appropriately distributing drive power between one drive shaft and another drive shaft, comprising:

   clutch means (15) for varying drive power distribution between one drive shaft and another drive shaft;
   engaging torque calculating means (33, 34, 35) for calculating engaging torque of the clutch means (15) depending on parameters representing traveling state of the vehicle;
   initial torque setting means (36) for setting an initial torque added, in a high speed region exceeding a predetermined vehicle speed, to engaging torque calculated by the engaging torque calculating means (33, 34, 35); and
   control means (37) for controlling the clutch means (15) based on a torque value that is the initial torque set by the initial torque setting means (36) added to the engaging torque calculated by the engaging torque calculating means (33, 34, 35).

2. The drive power distribution control device (30) for the vehicle as disclosed in claim 1, wherein the engaging torque calculating means (33, 34, 35) calculates engaging torque of the clutch means (15) according to at least input torque.

3. The drive power distribution control device (30) for the vehicle as disclosed in claim 1 or claim 2, wherein the engaging torque calculating means (33, 34, 35) calculate engaging torque of the clutch means (15) according to at least yaw moment applied on the vehicle.

# FIG.1

EP 1 731 348 A2

# FIG.2

# FIG.3

ACCELERATOR OPENING DEGREE SENSOR _25_

ENGINE SPEED SENSOR _26_

ENGINE TORQUE REFERENCE VALUE CALCULATING SECTION _41_

ENGINE TORQUE CALCULATING SECTION _42_

INPUT TORQUE CALCULATING SECTION _44_

VEHICLE SPEED CALCULATING SECTION _32_

TRANSMISSION GEAR RATIO CALCULATING SECTION _43_

LATERAL ACCELERATION SENSOR _23_

FIRST INPUT TORQUE SENSING TRANSFER TORQUE CALCULATING SECTION _45_

SECOND INPUT TORQUE SENSING TRANSFER TORQUE CALCULATING SECTION _46_

INPUT TORQUE SENSING TRANSFER TORQUE CALCULATING SECTION _47_

TRANSFER TORQUE CALCULATING SECTION _37_

_33_

EP 1 731 348 A2

**FIG.4**

34

22 STEERING WHEEL ANGLE SENSOR

51 BASIC ADDITIONAL YAW MOMENT SETTING SECTION

24 YAW RATE SENSOR

32 VEHICLE SPEED CALCULATING SECTION

52 LOW-SPEED-DRIVE VEHICLE SPEED SENSING GAIN SETTING SECTION

53 VEHICLE SLIP ANGULAR VELOCITY CALCULATING SECTION

54 VEHICLE SLIP ANGULAR VELOCITY SENSING GAIN SETTING SECTION

23 LATERAL ACCELERATION SENSOR

55 HIGH-SPEED-DRIVE VEHICLE SPEED SENSING GAIN SETTING SECTION

56 STEERING ANGLE/YAW RATE SENSING TRANSFER TORQUE CALCULATING SECTION

37 TRANSFER TORQUE CALCULATING SECTION

# FIG.5

**23** LATERAL ACCELERATION SENSOR

**22** STEERING WHEEL ANGLE SENSOR

**24** YAW RATE SENSOR

**32** VEHICLE SPEED CALCULATING SECTION

**51**

**65** REFERENCE LATERAL ACCELERATION CALCULATING SECTION

**66** LATERAL ACCELERATION DEVIATION CALCULATING SECTION

**67** BASIC ADDITIONAL YAW MOMENT CALCULATING SECTION

**61** LATERAL ACCELERATION /STEERING WHEEL ANGLE GAIN CALCULATING SECTION

**62** LATERAL ACCELERATION DEVIATION SENSING GAIN CALCULATING SECTION

**63** YAW RATE/STEERING WHEEL ANGLE GAIN CALCULATING SECTION

**64** YAW RATE SENSING GAIN CALCULATING SECTION

**56** STEERING ANGLE /YAW RATE SENSING TRANSFER TORQUE CALCULATING SECTION

EP 1 731 348 A2

# FIG.6

START

$\downarrow$ S101

READ IN NECESSARY PARAMETERS

$\downarrow$ S102

CALCULATE NECESSARY PARAMETERS

$\downarrow$ S103

CALCULATE FIRST TRANSFER TORQUE
(CALCULATE INPUT TORQUE SENSING
TRANSFER TORQUE $T_{LSDI}$)

$\downarrow$ S104

CALCULATE SECOND TRANSFER TORQUE
(CALCULATE STEERING ANGLE/YAW RATE
SENSING TRANSFER TORQUE $T_{LSDP}$)

$\downarrow$ S105

CALCULATE THIRD TRANSFER TORQUE
(CALCULATE TACK-IN PREVENTION
TRANSFER TORQUE $T_{LSDD}$)

$\downarrow$ S106

CALCULATE FOURTH TRANSFER TORQUE
(CALCULATE INITIAL TORQUE $T_{LSDH}$ AT
HIGH SPEED)

$\downarrow$ S107

CALCULATE AND OUTPUT TRANSFER
TORQUE $T_{LSD}$

$\downarrow$

RETURN

# FIG.7

FIRST TRANSFER TORQUE CALCULATING ROUTINE

CALCULATE ENGINE TORQUE
REFERENCE VALUE $T_{EGO}$ —S201

CALCULATE ENGINE TORQUE $T_{EG}$ —S202

CALCULATE TRANSMISSION GEAR RATIO $G_{TM}$ —S203

CALCULATE INPUT TORQUE $T_{CD}$ —S204

CALCULATE FIRST INPUT TORQUE
SENSING TRANSFER TORQUE $T_{LSDI1}$ —S205

CALCULATE SECOND INPUT TORQUE
SENSING TRANSFER TORQUE $T_{LSDI2}$ —S206

CALCULATE INPUT TORQUE
SENSING TRANSFER TORQUE $T_{LSDI}$ —S207

RETURN

# FIG.8

EP 1 731 348 A2

```
  ( ENGINE TORQUE CALCULATING ROUTINE )
                     │
                     ▼
S301
      ⟨  T EGO(K) > T EG (K-1) ?  ⟩──── NO ──────────────┐
                     │                                    │
                    YES                                   │
                     ▼                                    ▼
  ┌──────────────────────────────┐         ┌──────────────────────────────┐
  │ DELAY TIME CONSTANT T EGT =   │~S302    │ DELAY TIME CONSTANT T EGT =   │~S303
  │         T EGTu                │         │         T EGTd                │
  └──────────────────────────────┘         └──────────────────────────────┘
                     │                                    │
                     ◄────────────────────────────────────┘
                     ▼
  ┌──────────────────────────────┐
  │ CALCULATE ENGINE TORQUE T EG  │~S304
  └──────────────────────────────┘
                     │
                     ▼
             ( RETURN )
```

# FIG.9

FIRST INPUT TORQUE SENSING TRANSFER TORQUE CALCULATING ROUTINE

S401  $| (d^2y/dt^2) | > (d^2y_L/dt^2)$ ?  NO

YES

S403  $| (d^2y/dt^2) | > (d^2y_M/dt^2)$ ?  NO

YES

S405  $| (d^2y/dt^2) | > (d^2y_H/dt^2)$ ?  NO

YES

S404 CALCULATE FIRST INPUT TORQUE SENSING TRANSFER TORQUE T $_{LSDI1}$ USING INPUT TORQUE SENSING PROPORTIONAL CONSTANTS TBR $_{L1}$ AND TBR $_{M1}$ BY INTERPOLATION BETWEEN $(d^2y_L/dt^2)$ AND $(d^2y_M/dt^2)$

S407 CALCULATE FIRST INPUT TORQUE SENSING TRANSFER TORQUE T $_{LSDI1}$ USING INPUT TORQUE SENSING PROPORTIONAL CONSTANT TBR $_{H1}$

S406 CALCULATE FIRST INPUT TORQUE SENSING TRANSFER TORQUE T $_{LSDI1}$ USING INPUT TORQUE SENSING PROPORTIONAL CONSTANTS TBR $_{M1}$ AND TBR $_{H1}$ BY INTERPOLATION BETWEEN $(d^2y_M/dt^2)$ AND $(d^2y_H/dt^2)$

S402 CALCULATE FIRST INPUT TORQUE SENSING TRANSFER TORQUE T $_{LSDI1}$ USING INPUT TORQUE SENSING PROPORTIONAL CONSTANT TBR $_{L1}$

RETURN

# FIG.10

SECOND INPUT TORQUE SENSING TRANSFER TORQUE CALCULATING ROUTINE

S501 — $|T_{CD}| > T_{CDO}$? — NO / YES

S503 — $|(d^2y/dt^2)| > (d^2y_L/dt^2)$ ? — NO / YES

S505 — $|(d^2y/dt^2)| > (d^2y_M/dt^2)$ ? — NO / YES

S507 — $|(d^2y/dt^2)| > (d^2y_H/dt^2)$ ? — NO / YES

S502 — $T_{LSDI2} = 0$

S506 — CALCULATE SECOND INPUT TORQUE SENSING TRANSFER TORQUE $T_{LSDI2}$ USING INPUT TORQUE SENSING PROPORTIONAL CONSTANTS TBR $_{L2}$ AND TBR $_{M2}$ BY INTERPOLATION BETWEEN $(d^2y_L/dt^2)$ AND $(d^2y_M/dt^2)$

S509 — CALCULATE SECOND INPUT TORQUE SENSING TRANSFER TORQUE $T_{LSDI2}$ USING INPUT TORQUE SENSING PROPORTIONAL CONSTANT TBR $_{H2}$

S508 — CALCULATE SECOND INPUT TORQUE SENSING TRANSFER TORQUE $T_{LSDI2}$ USING INPUT TORQUE SENSING PROPORTIONAL CONSTANTS TBR $_{M2}$ AND TBR $_{H2}$ BY INTERPOLATION BETWEEN $(d^2y_M/dt^2)$ AND $(d^2y_H/dt^2)$

S504 — CALCULATE SECOND INPUT TORQUE SENSING TRANSFER TORQUE $T_{LSDI2}$ USING INPUT TORQUE SENSING PROPORTIONAL CONSTANT TBR $_{L2}$

RETURN

EP 1 731 348 A2

# FIG.11

```
( SECOND TRANSFER TORQUE CALCULATING ROUTINE )
                        │
        ┌───────────────────────────────────┐   S601
        │  SET BASIC ADDITIONAL YAW MOMENT M zθ │
        └───────────────────────────────────┘
                        │
        ┌───────────────────────────────────┐   S602
        │        SET LOW-SPEED-TRAVEL        │
        │  VEHICLE SPEED SENSING GAIN K Vvℓ  │
        └───────────────────────────────────┘
                        │
        ┌───────────────────────────────────┐   S603
        │ SET VEHICLE SLIP ANGULAR VELOCITY (dβ/dt) │
        └───────────────────────────────────┘
                        │
        ┌───────────────────────────────────┐   S604
        │   SET VEHICLE SLIP ANGULAR VELOCITY   │
        │      SENSING GAIN K V (dβ/dt)      │
        └───────────────────────────────────┘
                        │
        ┌───────────────────────────────────┐   S605
        │        SET HIGH-SPEED-TRAVEL        │
        │  VEHICLE SPEED SENSING GAIN K Vvh  │
        └───────────────────────────────────┘
                        │
        ┌───────────────────────────────────┐   S606
        │  CALCULATE ADDITIONAL YAW MOMENT MV zθ │
        └───────────────────────────────────┘
                        │
        ┌───────────────────────────────────┐   S607
        │      CALCULATE STEERING ANGLE      │
        │ /YAW RATE SENSING TRANSFER TORQUE T LSDP │
        └───────────────────────────────────┘
                        │
                 ( RETURN )
```

# FIG.12

```
┌─────────────────────────────────────────────────┐
│   BASIC ADDITIONAL YAW MOMENT SETTING ROUTINE    │
└─────────────────────────────────────────────────┘
                        │
        ┌───────────────────────────────────┐
        │         CALCULATE YAW RATE         │  S701
        │    /STEERING WHEEL ANGLE GAIN Gγ   │
        └───────────────────────────────────┘
                        │
        ┌───────────────────────────────────┐
        │   CALCULATE YAW RATE SENSING GAIN Kγ│  S702
        └───────────────────────────────────┘
                        │
        ┌───────────────────────────────────┐
        │   CALCULATE LATERAL ACCELERATION    │  S703
        │    /STEERING WHEEL ANGLE GAIN Gy    │
        └───────────────────────────────────┘
                        │
        ┌───────────────────────────────────┐
        │   CALCULATE LATERAL ACCELERATION    │  S704
        │     DEVIATION SENSING GAIN Ky       │
        └───────────────────────────────────┘
                        │
        ┌───────────────────────────────────┐
        │         CALCULATE REFERENCE         │  S705
        │   LATERAL ACCELERATION (d²yr/dt²)   │
        └───────────────────────────────────┘
                        │
        ┌───────────────────────────────────┐
        │         CALCULATE LATERAL           │  S706
        │  ACCELERATION  DEVIATION (d²ye/dt²) │
        └───────────────────────────────────┘
                        │
        ┌───────────────────────────────────┐
        │  CALCULATE BASIC ADDITIONAL YAW MOMENT M zθ │  S707
        └───────────────────────────────────┘
                        │
                  ┌──────────┐
                  │  RETURN  │
                  └──────────┘
```

# FIG.13

VEHICLE SLIP ANGULAR VELOCITY
SENSING GAIN SETTING ROUTINE

SET BASIC VEHICLE SLIP ANGULAR
VELOCITY SENSING GAIN KV (d$\beta$/dt)$_0$ — S801

CALCULATE RETURN GRADIENT
LIMITED VEHICLE SLIP ANGULAR
VELOCITY SENSING GAIN KV (d$\beta$/dt)$_L$ — S802

S803
KV (d$\beta$/dt)$_L \leqq 1$ ? — NO

YES

KV (d$\beta$/dt)$_L = 1$ — S804

S805
KV (d$\beta$/dt)$_0 <$ KV (d$\beta$/dt)$_L$ ? — NO

YES

KV (d$\beta$/dt) = KV (d$\beta$/dt)$_0$ — S806

KV (d$\beta$/dt) = KV (d$\beta$/dt)$_L$ — S807

RETURN

EP 1 731 348 A2

# FIG.14

THIRD TRANSFER TORQUE CALCULATING ROUTINE

S901 — IS TACK-IN PREVENTION CONTROL BEING PERFORMED? —— YES

NO

S902 — $\theta_{ACC} = 0$ ? —— NO

YES

S903 — PREVIOUS ACCELERATOR OPENING DEGREE $\theta_{ACC} > 0$ ? —— NO

YES

S904 — $| (d^2y/dt^2) | > (d^2y/dt^2)_{Doff}$ ? —— NO

YES

S905 — $V > V_{Doff}$ ? —— NO

YES

S907 — $\theta_{ACC} > 0$ ? —— YES

NO

S908 — $V < V_{Doff}$ ? —— NO

YES

S906 PERFORM TACK-IN PREVENTION CONTROL CALCULATE TACK-IN PREVENTION TRANSFER TORQUE $T_{LSDD}$

S909 RELEASE TACK-IN PREVENTION CONTROL $T_{LSDD} = 0$

RETURN

EP 1 731 348 A2

# FIG.15

EP 1 731 348 A2

# FIG.16

LATERAL ACCELERATION AT TIME OF
MAXIMUM STEERING WHEEL TURN OBTAINED
BY LINEAR COMPUTATION

$(d^2yx/dt^2)$

10

10

$(d^2y/dt^2)$

# FIG.17

# FIG.18

K Vvℓ

1.0

20    40    V

# FIG.19

K V (dβ/dt) o

1.0

m1    m2    (dβ/dt)

# FIG.20

# FIG.21

# FIG.22

K Vvh

$(d^2y/dt^2) \geqq 9$

1.0

$(d^2y/dt^2) \leqq 3$

60          120          V

# FIG.23

**REFERENCES CITED IN THE DESCRIPTION**

**Patent documents cited in the description**

- JP 2002127772 A